# EUROPÄISCHE PATENTSCHRIFT

(11) **EP 3 786 032 B1**
(45) Veröffentlichungstag und Bekanntmachung des Hinweises auf die Patenterteilung: **21.09.2022**
(21) Anmeldenummer: 20207000.9
(22) Anmeldetag: 11.11.2020
(51) Int. Cl.: B62D 25/14

(54) **INSTRUMENTENTAFELTRÄGER FÜR EIN KRAFTFAHRZEUG**
INSTRUMENT PANEL HOLDER FOR A MOTOR VEHICLE
SUPPORT DU TABLEAU DE BORD POUR UN VÉHICULE AUTOMOBILE

(43) Veröffentlichungstag der Anmeldung: 03.03.2021
(73) Patentinhaber: Benteler Automobiltechnik GmbH, 33102 Paderborn (DE)
(72) Erfinder: WERNEKE, Simon, 33142 Büren (DE); TATARINOV, Konstantin, 33602 Bielefeld (DE); FOSHAG, Timo, 34414 Warburg (DE); THIESSEN, Thomas, 33189 Schlangen (DE); STEFFENS, Martin, 33100 Paderborn (DE); MOLLEMEIER, Elmar, 33129 Delbrück (DE); LAPSIEN, Rainer, 33142 Büren-Wewelsburg (DE); SCHRÖTER, Carsten, 50259 Pulheim (DE); BERGSCHNEIDER, Meinolf, 33178 Borchen-Dörenhagen (DE)
(74) Vertreter: Ksoll, Peter

(56) Entgegenhaltungen:
- EP-A1- 1 816 055
- DE-A1-102018 126 048
- DE-U1-202013 011 387
- US-A1- 2004 056 463
- US-A1- 2013 154 300
- US-A1- 2016 052 395
- US-B1- 6 176 544

## Beschreibung

Die Erfindung betrifft einen Instrumententafelträger für ein Kraftfahrzeug, der einen zwischen den A-Säulen einer Kraftfahrzeugkarosserie eingliederbaren Querträger aufweist.

Instrumententafelträger werden in Kraftfahrzeugen als tragendes Bauteil für diverse Cockpit-Funktionen eingesetzt. Eine der Hauptkomponenten eines Instrumententafelträgers ist der Querträger. Der Querträger ist Teil der Kraftfahrzeugkarosserie und erstreckt sich im Bereich unterhalb der Windschutzscheibe im Wesentlichen horizontal verlaufend quer zwischen den A-Säulen. Der Querträger weist einen fahrerseitigen Längenabschnitt und einen beifahrerseitigen Längenabschnitt auf und ist in der Regel gegen die Stirnwand, also die Trennwand zwischen Motorraum und Fahrzeuginnenraum, sowie gegen den Fahrzeugboden hin zusätzlich abgestützt.

Der Querträger hat eine versteifende Wirkung auf die Kraftfahrzeugkarosserie und dient zur Befestigung der Instrumententafel, wobei dem Querträger außerdem die Aufgabe zukommt, die Instrumententafel selbst auszusteifen. An dem Querträger sind diverse Halterungen vorgesehen, an denen die Instrumententafel sowie weitere Fahrzeugfunktionskomponenten wie die Lenksäule, Heizungs- und Klimaanlage, Airbag, Mittelkonsole, Sicherungskasten oder Handschuhfach befestigt werden.

Die Hauptkräfte durch die Lenksäule und die Lenkeinrichtung, die Gewichtskraft durch die Instrumententafel sowie die Abstützkraft an der Lenkung durch den Fahrer werden hauptsächlich im Bereich der Fahrerseite auf den Querträger übertragen. Die Belastungen des Querträgers auf der Beifahrerseite sind üblicherweise geringer. Daher werden die Querträger regelmäßig mit einem sich über die Länge des Querträgers ändernden Profilquerschnitt hergestellt oder aus Längenabschnitten unterschiedlicher Querschnittsgeometrie zusammengesetzt. Den Kräfteverhältnissen entsprechend weist der Längenabschnitt auf der Fahrerseite einen größeren Profilquerschnitt auf als der Längenabschnitt auf der Beifahrerseite. Durch eine derartige Querschnitts- bzw. Durchmesseranpassung wird der Querträger auf die lokal einwirkenden Kräfte abgestimmt, wodurch eine Gewichtsoptimierung des Querträgers erreicht wird. Zudem kann in gewissem Maße eine Anpassung des Querschnitts an die Bauraumverhältnisse im vorderen Bereich der Kraftfahrzeugkarosserie vorgenommen werden.

Bei der aus der US 6,817,382 B2 bekannten Ausführungsform ist der Querträger aus einzelnen Längenabschnitten zusammengesetzt, wobei die Längenabschnitte voneinander verschiedene Querschnitte besitzen. Die Längenabschnitte sind durch plastische Verformung eines Verformungsabschnitts miteinander verbunden.

Auch die aus der DE 101 21 402 A1 oder der EP 1 655 208 A1 bekannten Querträger von Instrumententafelstrukturen weisen Längenabschnitte mit unterschiedlichen Querschnittskonfigurationen auf, die über Verbindungsbauteile miteinander gefügt sind.

Mit der Anbindung des Querträgers eines Instrumententafelträgers an den seitlichen A-Säulen befasst sich die EP 2 499 038 B1. Dort sind Befestigungsöffnungen zur Durchführung von länglichen Befestigungsorganen unmittelbar durch die rohrförmig gestalteten Enden des Querträgers hindurch ausgebildet.

Bei dem aus der EP 2 542 462 B1 bekannten Vorschlag umfasst der Querträger Mittel zur Befestigung eines Endabschnitts des Trägers an einer A-Säule. Die Befestigungsmittel sind durch eine erste Öffnung und eine zweite Öffnung gebildet, wobei die erste Öffnung durch den Träger selbst hindurch ausgebildet ist und die zweite Öffnung durch ein separates am Endabschnitt gefügtes Befestigungselement hindurch ausgebildet ist.

Solche Vorschläge sind auch durch die DE 10 2005 004 605 B4 vorbekannt.

Einen Instrumententafelträger mit einem Querträger offenbart auch die WO 2005/090145 A1. Dort sind Querträger mit unterschiedlichen Querschnittskonfigurationen und insbesondere unterschiedlich konfigurierten Endabschnitten offenbart.

Ein Querträger mit rechtwinklig zur Längserstreckung des Querträgers verlaufenden Endabschnitten, die Befestigungsöffnungen aufweisen, geht aus der FR 2 926 526 B1 hervor.

Einen Querträger für einen Instrumententafelträger, bei dem die Endabschnitte abgeflacht und mit Befestigungsöffnungen versehen sind, ist in der WO 2009/080968 A1 offenbart.

Durch die US 2013/0154300 A1 zählt weiterhin ein Verfahren zur Herstellung eines Instrumententafelträgers sowie ein Instrumententafelträger zum Stand der Technik, wobei der Instrumententafelträger an seinen Enden eine Aufnahme zur Kopplung mit A-Säulen eines Kraftfahrzeuges aufweist. Die Aufnahme ist aus einem Strangpressprofil hergestellt. Dieses Dokument offenbart einen Instrumententafelträger nach dem Oberbegriff von Anspruch 1.

Die US 6,176,544 B1 offenbart einen Instrumententafelträger mit einer Verstärkungsstruktur, die fahrerseitige und beifahrerseitige Querrohre umfasst. Hierbei handelt es sich vorzugsweise um Strangpressprofile aus einer Alluminiumlegierung. Ferner ist eine Mittelabstützung vorgesehen, die vorzugsweise ein Gussteil aus einer Magnesiumlegierung ist.

Bei dem in der US 2004/0056463 A1 beschriebenen Instrumententafelquerträger ist ein Querträger vorgesehen mit einer Vielzahl thermoplastischer Energieabsorbern.

Weiterhin beschreibt die DE 20 2013 011 387 U1 einen Instrumententafelträger mit einem Querträger und endseitigen Montagebügeln, die dazu ausgebildet sind, an den A-Säulen einer Kraftfahrzeugkarosserie festgelegt zu werden. Hierbei soll der beifahrerseitige Montagebügel weniger widerstandsfähig sein gegen in Querrichtung wirkende Druckkräfte als der fahrerseitige Montagebügel.

In der US 2016/0052395 A1 wird ein Verfahren zur Herstellung eines Instrumententafelträgers beschrieben, der eine Aufnahme für einen Anbauteil, insbesondere ein Head-Up-Display aufweist.

Aus der DE 10 2018 126 048 A1 geht eine Querträgeranordnung für ein Fahrzeug hervor mit einem Befestigungselement, welches geformt ist, um die Querträgeranordnung an der A-Säule des Fahrzeugs zu befestigen, wobei das Befestigungselement beabstandet von dem rohrförmigen Querträger angeordnet ist. Das Befestigungselement und der Querträger sind über ein gekrümmtes Verbindungselement stoffschlüssig verbunden.

Weiterhin offenbart die EP 1 816 055 A1 einen Armaturenbrettträger. Dieser weist zwei fest verbundene parallele Rohrteile auf, die mit ihren inneren Enden radial und axial gegeneinander versetzt sind. Die Montage des Armaturenbrettquerträgers an den A-Säulen erfolgt über endseitige Bügel.

Der Erfindung liegt ausgehend vom Stand der Technik die Aufgabe zugrunde, einen bauteiltechnisch verbesserten Instrumententafelträger aufzuzeigen.

Ein Teilaspekt dieser Aufgabe besteht darin, einen Querträger für einen Instrumententafelträger zu schaffen mit einer vorteilhaften Anbindung an die A-Säulen eines Kraftfahrzeugs, wobei die Anbindung modular an verschiedene Baureihen eines Kraftfahrzeugs anpassbar ist.

Ein weiterer Teilaspekt der Aufgabe besteht darin, einen Querträger für einen Instrumententafelträger zu schaffen, der in seiner Längserstreckung belastungsgerecht und biegesteif ausgelegt ist sowie kostengünstig und rationell herstellbar ist.

Ein weiterer Teilaspekt der Aufgabe besteht darin, den Querträger gewichtsmäßig zu optimieren.

Die Lösung dieser Aufgabe bzw. der Teilaspekte der erfindungsgemäßen Aufgabe zeig der Instrumententafelträger gemäß dem unabhängigen Anspruch auf.

Vorteilhafte Ausgestaltungen und Weiterbildungen der Erfindung sind Gegenstand der abhängigen Ansprüche.

Begriffe wie oben und unten, horizontal und vertikal oder Längsrichtung und Querrichtung sowie Oberseite und Unterseite, Fahrerseite, fahrerseitig, Beifahrerseite oder beifahrerseitig beziehen sich auf die Einbaulage des Querträgers zwischen den A-Säulen innerhalb einer Kraftfahrzeugkarosserie.

Ein Fahrzeugkoordinatensystem ist ein dreidimensionales kartesisches Koordinatensystem, um die Achsen innerhalb eines Kraftfahrzeugs zu kennzeichnen. Die x- und y-Achse liegen in einer Horizontalebene (= Fahrbahnebene). Die x-Achse (Fahrzeuglängsachse) befindet sich in der Fahrzeuglängsmittelebene und ist nach vorne waagerecht und in Bewegungsrichtung des Fahrzeugs gerichtet. Die y-Achse (Fahrzeugquerachse) steht senkrecht auf der Fahrzeuglängsmittelebene und zeigt quer zur Bewegungsrichtung des Fahrzeugs. Die z-Achse (Fahrzeughochachse) steht senkrecht auf der x-y-Ebene des Fahrzeugs und zeigt mit ihrer positiven Richtung nach oben.

Der Instrumententafelträger weist einen zwischen den A-Säulen einer Kraftfahrzeugkarosserie eingliederbaren Querträger auf. Der Querträger besitzt einen fahrerseitigen Längenabschnitt und einen beifahrerseitigen Längenabschnitt. Vorzugsweise sind der fahrerseitige Längenabschnitt und der beifahrerseitige Längenabschnitt voneinander unabhängig gefertigt und an einer Schnittstelle miteinander verbunden. Wenigstens am fahrerseitigen Ende des Querträgers ist ein Montagebauteil zur Befestigung an eine A-Säule vorgesehen.

Am beifahrerseitigen Ende des Querträgers kann ein gleiches oder vom Montagebauteil am fahrerseitigen Ende verschiedenes Montagebauteil vorgesehen sein. Das Montagebauteil am beifahrerseitigen Ende des Querträgers kann auch aus dem Rohr des Querträgers selbst ausgebildet sein, beispielsweise durch eine Abplattung, die mit Montageöffnungen versehen ist.

Die Montagebauteile können separate jeweils an einem Ende des Querträgers gefügte Bauteile sein. Ein Montagebauteil kann auch durch das Ende bzw. einen Endabschnitt des Querträgers selbst gebildet sein. Weiterhin ist es möglich, die Anbindung des Querträgers an eine A-Säule durch eine Konfiguration der Endabschnitte in der Kombination mit in die Endabschnitte ein- bzw. angesetzte Montagebauteile zu gestalten. Hierzu ist der Endabschnitt eines Querträgers partiell ausgeschnitten. In diese Aussparung ist ein Montagebauteil eingesetzt.

Das Montagebauteil kann auch aus dem Ende des Querträgers bzw. dem Endabschnitt des Querträgers gebildet sein, wobei zusätzlich ein Ergänzungsbauteil vorgesehen ist, welches mit dem Ende bzw. Endabschnitt des Querträgers gefügt ist. Der zugeschnittene Endabschnitt und das an diesem gefügte Ergänzungsbauteil bilden gemeinsam das Montagebauteil, welches zweckentsprechend angeordnete Montageöffnungen zur Durchführung von länglichen Befestigungsmitteln, insbesondere Montageschrauben, aufweist.

Im Montagebauteil ebenso wie in dem mit dem Montagebauteil zusammenwirkenden Endabschnitt des Querträgers sind Montageöffnungen zur Durchführung von Befestigungsmitteln vorzugsweise in Fahrzeuglängsachse (x-Achse) vorgesehen. Grundsätzlich kann der Durchgang der Befestigungsmittel auch in einem Winkel zur Fahrzeuglängsrichtung verlaufen.

Erfindungsgemäß vorgesehene Verstärkungselemente verleihen der Anbindung des Querträgers an eine A-Säule die notwendige Festigkeit sowie Längs- und Quersteifigkeit. Eine für die Praxis vorteilhafte Ausgestaltung sieht vor, dass zwischen die Schenkel des Montagebauteils zumindest ein sich an den Schenkeln abstützendes Verstärkungselement eingegliedert ist.

Bei einem erfindungsgemäßen Instrumententafelträger ist zumindest ein Montagebauteil U-förmig konfiguriert und weist einen Steg mit zwei Schenkeln auf. In jedem Schenkel sind vorzugsweise zumindest zwei mit vertikalem Abstand zueinander angeordnete Montageöffnungen vorgesehen. Die Montageöffnungen dienen zur Durchführung von länglichen Befestigungsmitteln, insbesondere Montageschrauben. Die Montageöffnungen in den Schenkeln sind zum Durchgang der Befestigungsmittel vorzugsweise in Fahrzeuglängsrichtung (x-Achse) ausgebildet.

Zwischen den Schenkeln ist zumindest ein sich an den Schenkeln abstützendes Verstärkungselement eingegliedert.

Mittels des U-förmig konfigurierten Montagebauteils kann die Anbindung des Querträgers eines Instrumententafelträgers variabel gestaltet werden jeweils in Anpassung an eine Baureihe eines Kraftfahrzeugs. Dies erfolgt insbesondere durch die geometrische Auslegung des Montagebauteils, vorzugsweise durch die Höhe und die Länge oder Breite der Schenkel und der Höhe und/oder Länge und/oder Breite des Stegs und/oder durch die Anordnung der Montageöffnung und insbesondere durch Abstand zwischen den Montageöffnungen sowie durch die Anordnung des Montagebauteils selbst relativ zum benachbarten Ende des Querträgers, insbesondere in z-Achse.

Besonders vorteilhaft können die Schenkel des Montagebauteils das Ende des Querträgers toleranzausgleichend überlappen.

Das Montagebauteil kann mit den Schenkeln oder mit dem Steg am Ende des Querträgers gefügt, insbesondere geschweißt sein.

Ein Verstärkungselement erstreckt sich zwischen einer Montageöffnung im ersten Schenkel und einer Montageöffnung im zweiten Schenkel. Eine Montageöffnung im ersten Schenkel und eine Montageöffnung im zweiten Schenkel sind korrespondierend zueinander angeordnet und liegen vorzugsweise in Fahrzeuglängsrichtung (x-Achse) auf einer Höhe und haben eine gemeinsame Achse. Das Verstärkungselement stützt sich jeweils innenseitig an den beiden Schenkeln ab und ist vorzugsweise mit den Schenkeln gefügt. An den Innenseiten der Schenkel können Positionierhilfen für ein Verstärkungselement vorgesehen sein. Eine Positionierhilfe kann beispielsweise durch eine Materialverprägung ausgebildet sein.

Besonders vorteilhaft ist ein Verstärkungselement eine Hülse oder ein im Querschnitt U-, V-, S- oder Z-förmig konfigurierter Stützkörper. Ein Verstärkungselement umschließt bzw. umgreift zumindest teilweise die sich jeweils in x-Richtung durch die Mittelpunkte der oberen Montageöffnungen bzw. der unteren Montageöffnungen im ersten vorderen Schenkel und im zweiten hinteren Schenkel verlaufende Achse.

Vorteilhafterweise umgreift das Montagebauteil mit den Schenkeln die Seitenabschnitte des Endes des Querträgers.

Möglich ist es auch, dass das Montagebauteil mit dem Steg am Ende des Querträgers gefügt ist. Die Schenkel sind dann in Längsrichtung des Querträgers bzw. der Fahrzeugquerachse (y-Achse) nach außen gerichtet.

Gemäß anderer Ausführungsformen und Modifikationen umfasst der Instrumententafelträger eines oder mehrere der folgenden Merkmale, welche alleine oder in technisch vorteilhafter Kombination vorgesehen sind:
- ein Montagebauteil ist U-förmig konfiguriert mit einem Steg und zwei Schenkeln;
- ein U-förmig konfiguriertes Montagebauteil weist oberseitig einen Deckelschenkel und/oder unterseitig einen Bodenschenkel auf;
- das Verstärkungselement ist eine Hülse;
- das Verstärkungselement ist ein im Querschnitt U-, V-, S- oder Z-förmig konfigurierter Stützkörper;
- das Montagebauteil ist mit den Schenkeln am Ende des Querträgers gefügt;
- das Montagebauteil umgreift mit den Schenkeln Seitenabschnitte des Endes des Querträgers;
- das Montagebauteil ist mit dem Steg am Endes des Querträgers gefügt;
- ein Verstärkungselement ist materialeinheitlich und einstückig im Montagebauteil ausgebildet und weist einen Durchgang für ein Befestigungsmittel in Fahrzeuglängsrichtung (x-Achse) auf;
- ein A-säulenseitiger Endabschnitt, insbesondere der fahrerseitige Endabschnitt des Querträgers ist rechteckig konfiguriert;
- in einem oder jedem Endabschnitt des Querträgers sind Montageöffnungen für den Durchgang von Befestigungsmitteln in Fahrzeuglängsrichtung (x-Achse) vorgesehen;
- in Längsrichtung des fahrerseitigen Längenabschnitts des Querträgers einander kontaktierende Stoßkanten sind zumindest bereichsweise miteinander stoffschlüssig gefügt;
- der fahrerseitige Längenabschnitt des Querträgers ist aus Schalenbauteilen gebildet, insbesondere aus zwei Halbschalen;
- der fahrerseitige Längenabschnitt weist einen Endabschnitt auf, welcher aus zwei Schalenbauteilen zusammengesetzt ist;
- der fahrerseitige Längenabschnitt des Querträgers weist Abschnitte mit voneinander verschiedenen Wandstärken auf;
- der fahrerseitige Längenabschnitt des Querträgers weist Abschnitte mit voneinander verschiedenen Durchmessern auf;
- der fahrerseitige Endabschnitt des Querträgers weist eine Aussparung auf, in welche ein Montagebauteil oder ein Ergänzungsbauteil eingesetzt ist;
- der Querträger oder ein Längenabschnitt des Querträgers ist durch Innenhochdruckumformung geformt.

Ein erfindungsgemäßer Instrumententafelträger ist bauteiltechnisch verbessert und weist einen Querträger auf, der vorteilhaft an die jeweilige A-Säule angebunden werden kann. Die Anbindung ist modular an verschiedene Baureihen eines Kraftfahrzeugs anpassbar. Weiterhin ist der Querträger in Längsrichtung bzw. in seiner Längserstreckung belastungsgerecht und biegesteif auslegbar. Wandstärke und Querschnittsgeometrie des Querträgers sind auf die einwirkenden statischen und dynamischen Kräfte ausgelegt. Weiterhin ist der Querträger gewichtsmäßig verbessert durch Einsparung von Material an weniger belasteten Stellen sowie durch eine Querschnittsgestaltung abgestimmt auf die im Kraftfahrzeug aufzunehmenden bzw. einwirkenden Kräfte.

Eine vorteilhafte Ausgestaltung eines Montagebauteils sieht vor, dass dieses U-förmig konfiguriert ist und einen Steg sowie zwei Schenkel aufweist. In den Schenkeln sind zueinander korrespondierende Montageöffnungen zur Durchführung eines länglichen Befestigungselements vorgesehen.

Bei einer Ausgestaltung dieser Konfiguration weist das Montagebauteil an seiner Oberseite einen Deckelschenkel und/oder an seiner Unterseite einen Bodenschenkel auf. Der Deckelschenkel und/oder der Bodenschenkel sind ausgehend vom Steg nach innen in Richtung auf bzw. in die Schenkel umgestellt. Der Deckelschenkel und der Bodenschenkel gewährleisten eine weitere Versteifung des Montagebauteils. Zusätzlich können der Deckelschenkel und/oder der Bodenschenkel mit den seitlichen Schenkeln des Montagebauteils stoffschlüssig gefügt sein.

Das Montagebauteil ist aus einem Blechzuschnitt hergestellt, welches der Abwicklung des Montagebauteils entspricht.

Weiterhin kann das Montagebauteil zumindest in einem Längenabschnitt durch Umformung des rohrförmigen Endabschnitts des Querträgers gestaltet sein, insbesondere durch eine Abplattung des Endabschnitts oder eines partiellen Bereichs des Endabschnitts. Bei einer Abplattung sind die vorderen und hinteren vertikalen Seitenwandbereiche des Endabschnitts abgeflacht und aufeinander zu bewegt. Eine Abplattung bedeutet nicht, dass die Seitenwandbereiche aneinander liegen. Im vertikalen Querschnitt ist der Endabschnitt in etwa rechteckig konfiguriert mit einer größeren Längsachse als Querachse.

Weiterhin kann ein Wandabschnitt des Endabschnitts des Querträgers ausgeschnitten sein. Insbesondere kann der vom Innenraum eines Kraftfahrzeugs aus gesehen hintere Schenkel des Endabschnitts des Querträgers entfernt sein.

Der fahrerseitige Längenabschnitt des Querträgers kann aus zwei Schalenbauteilen zusammengesetzt sein. Der A-säulenseitige Endabschnitt des fahrerseitigen Endabschnitts ist rechteckig konfiguriert und weist Montageöffnungen auf. Die Montageöffnungen sind für den Durchgang von Befestigungsmitteln in Fahrzeuglängsrichtung (x-Achse) konfiguriert. Weiterhin ist in diesem Endabschnitt zumindest ein sich zwischen den Seitenwänden des Endabschnitts abstützendes Verstärkungselement eingegliedert.

Eine weitere Alternative sieht vor, dass der fahrerseitige Längenabschnitt einen Endabschnitt aufweist, welcher aus zwei Schalenbauteilen zusammengesetzt ist. Auf diese Weise können Grundmodule von Querträgern bereitgestellt werden, die in ihrer Länge durch den Endabschnitt auf die jeweilige Modellreihe bzw. Baureihe eines Kraftfahrzeugs ausgelegt werden. Gleiches gilt für die Anbindung an die A-Säulen. Der aus Schalenbauteilen gebildete Endabschnitt ist rechteckig konfiguriert und weist Montageöffnungen für den Durchgang von Befestigungsmitteln in Fahrzeuglängsrichtung (x-Achse) auf. Im Endabschnitt ist zumindest ein sich zwischen Seitenwänden des Endabschnitts abstützendes Verstärkungselement eingegliedert.

Erfindungsgemäß ist zumindest der fahrerseitige Längenabschnitt des Querträgers in Vertikalebene geteilt.

Bevorzugt ist ein rechteckig konfiguriertes Ende des fahrerseitigen Längenabschnitts des Querträgers.

Grundsätzlich kann das Ende auch einen oval konfigurierten Querschnitt besitzen. Weiterhin können Sicken in den Seitenwänden des Endabschnitts des Querträgers vorgesehen sein. Die Sicken erstrecken sich insbesondere in Fahrzeugquerachse bzw. Längsrichtung des Querträgers.

Weiterhin kann zumindest in einer Seitenwand des A-säulenseitigen Endabschnitts des fahrerseitigen Längenabschnitts des Querträgers eine zum Ende des Querträgers hin offene Aussparung vorgesehen sein. In die Aussparung ist ein Montagebauteil eingesetzt. Das Montagebauteil weist Montageöffnungen zur Durchführung von länglichen Befestigungsmitteln in Fahrzeuglängsachse (x-Achse) auf.

Ausführungsformen der Erfindung sowie erfindungsgemäße Aspekte sind in den nachfolgenden Zeichnungen beschrieben. Es zeigen:
- Figur 1: einen erfindungsgemäßen Instrumententafelträger in einer Perspektive;
- Figur 2: den fahrerseitigen Längenabschnitt eines Instrumententafelträgers in einer Perspektive;
- Figur 3: die Darstellung gemäß der Figur 2 in einer Draufsicht;
- Figur 4: die Darstellung gemäß der Figur 2 in einer Seitenansicht;
- Figur 5: den Endabschnitt des Querträgers mit dem Montagebauteil zur Anbindung an eine A-Säule;
- Figur 6: das Montagebauteil entsprechend der Darstellung der Figur 5 aus einer anderen Perspektive;
- Figur 7: eine nicht erfindungsgemäße Ausführungsform eines Instrumententafelträgers mit der Darstellung des fahrerseitigen Längenabschnitts eines Querträgers in einer perspektivischen Darstellungsweise;
- Figur 8: die Darstellung entsprechend der Figur 7 in einer Draufsicht;
- Figur 9: die Darstellung entsprechend der Figur 7 in einer Seitenansicht;
- Figur 10: das endseitige Montagebauteil des Querträgers entsprechend der Darstellung von Figur 7;
- Figur 11: eine nicht erfindungsgemäße Ausführungsform eines Instrumententafelträgers mit der Darstellung des fahrerseitigen Längenabschnitts des Querträgers in einer Perspektive;
- Figur 12: die Darstellung entsprechend der Figur 11 in einer Draufsicht;
- Figur 13: die Darstellung entsprechend der Figur 11 in einer Seitenansicht;
- Figur 14: ein Montagebauteil zur Festlegung eines Instrumententafelträgers bzw. dessen Querträgers an eine A-Säule in einer perspektivischen Darstellung;
- Figur 15: eine nicht erfindungsgemäße Ausführungsform eines Instrumententafelträgers mit der Darstellung des fahrerseitigen Längenabschnitts eines Querträger in einer Perspektive;
- Figur 16: die Darstellung entsprechend der Figur 15 in einer Draufsicht;
- Figur 17: die Darstellung entsprechend der Figur 15 in einer Seitenansicht;
- Figur 18: das Montagebauteil des Instrumententafelträgers in einer Perspektive;
- Figur 19: das Montagebauteil entsprechend der Darstellung von Figur 15 in einer anderen Perspektive;
- Figur 20: eine nicht erfindungsgemäße Ausführungsform eines Instrumententafelträgers mit der Darstellung des fahrerseitigen Längenabschnitts des Querträgers in einer Perspektive;
- Figur 21: eine nicht erfindungsgemäße Ausführungsform eines Instrumententafelträgers mit der Darstellung des fahrerseitigen Längenabschnitts des Querträgers in einer Perspektive;
- Figur 22: eine weitere Ausführungsform eines Instrumententafelträgers mit der Darstellung des fahrerseitigen Längenabschnitts des Querträgers in einer Draufsicht;
- Figur 23: die Darstellung entsprechend der Figur 22 in einer Seitenansicht;
- Figur 24: einen Schnitt durch den endseitigen Anbindungsbereich des Querträgers;
- Figur 25: eine weitere Ausführungsform eines Instrumententafelträgers mit der Darstellung des fahrerseitigen Längenabschnitts des Querträgers in einer Seitenansicht von vorne;
- Figur 26: einen Schnitt durch das Ende des Querträgers gemäß der Darstellung der Figur 25;
- Figur 27: eine erfindungsgemäße Ausführungsform eines Instrumententafelträgers mit der Darstellung des fahrerseitigen Längenabschnitts des Querträgers in einer Perspektive;
- Figur 28: die Darstellung entsprechend der Figur 27 in einer Seitenansicht von vorne;
- Figur 29: die Darstellung entsprechend der Figur 27 in einer Draufsicht;
- Figur 30: eine nicht erfindunasaemäße Ausführungsform eines Instrumententafelträgers mit der Darstellung des fahrerseitigen Längenabschnitts des Querträgers in einer Perspektive;
- Figur 31: eine weitere nicht erfindunasaemäße Ausführungsform eines Instrumententafelträgers mit der Darstellung eines Ausschnitts aus dem fahrerseitigen Längenabschnitt des Querträgers in einer Perspektive;
- Figur 32: eine Ansicht auf das stirnseitige Ende eines Querträgers;
- Figur 33: eine Ansicht auf das stirnseitige Ende eines Querträgers;
- Figur 34: eine Ansicht auf das stirnseitige Ende eines Querträgers;
- Figur 35: den beifahrerseitigen Längenabschnitt des Querträgers eines Instrumententafelträgers;
- Figur 36: eine Draufsicht auf einen Endabschnitt eines Querträgers eines Instrumententafelträgers;
- Figur 37: eine Stirnansicht auf das Querträgerende gemäß der Darstellung in Figur 36;
- Figur 38: eine andere Konfiguration des Endabschnitts eines Querträgers in einer Seitenansicht;
- Figur 39: eine Stirnansicht auf das Querträgerende gemäß der Darstellung von Figur 38;
- Figur 40: eine weitere Ausführungsform eines Instrumententafelträgers mit der Darstellung des fahrerseitigen Längenabschnitts eines Querträgers in einer Perspektive;
- Figur 41: eine nicht erfindungsgemäße Ausführungsform eines Instrumententafelträgers in einer perspektivischen Darstellung;
- Figur 42: den fahrerseitigen Längenabschnitt des Instrumententafelträgers gemäß der Darstellung von Figur 41 ;
- Figur 43: den Endabschnitt des Längenabschnitts gemäß der Darstellung von Figur 42 aus einer anderen Perspektive und
- Figur 44: das Montagebauteil entsprechend der Darstellung der Figuren 41 bis 43 in einer Perspektive.

Einander entsprechende Bauteile und Bauteilkomponenten sind in allen Figuren mit den gleichen Bezugszeichen versehen.

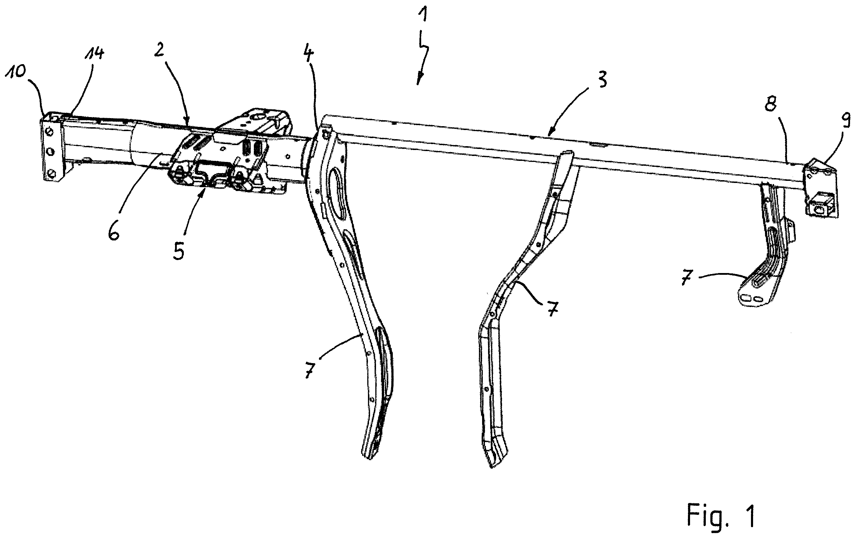

Die Figur 1 zeigt einen Instrumententafelträger in einer perspektivischen Darstellung. Der Instrumententafelträger weist einen Querträger 1 auf. Der Querträger 1 ist zwischen hier nicht dargestellten A-Säulen einer Fahrzeugkarosserie eingliederbar und erstreckt sich im Wesentlichen horizontal verlaufend quer zwischen den A-Säulen. Der Querträger 1 besteht aus einem fahrerseitigen Längenabschnitt 2 und einem beifahrerseitigen Längenabschnitt 3, die über ein Verbindungsbauteil 4 miteinander gekoppelt sind. Der beifahrerseitige Längenabschnitt 3 ist durch ein gradlinig verlaufendes Rohr gebildet. Der fahrerseitige Längenabschnitt 2 weist über seine Längserstreckung einen variierenden Querschnittsverlauf auf. Im Bereich der Lenksäulenanbindung 5 besitzt der fahrerseitige Längenabschnitt 2 einen annähernd kreisrund geformten Tragabschnitt 6. Am Querträger 1 sind des Weiteren Abstützstreben 7 vorgesehen.

Am A-säulenseitigen Ende 8 des beifahrerseitigen Längenabschnitts 3 ist ein Montagebauteil 9 an das Ende 8 des Querträgers 1 gefügt. Über dieses Montagebauteil 9 erfolgt die Anbindung des Querträgers 1 an der beifahrerseitigen A-Säule.

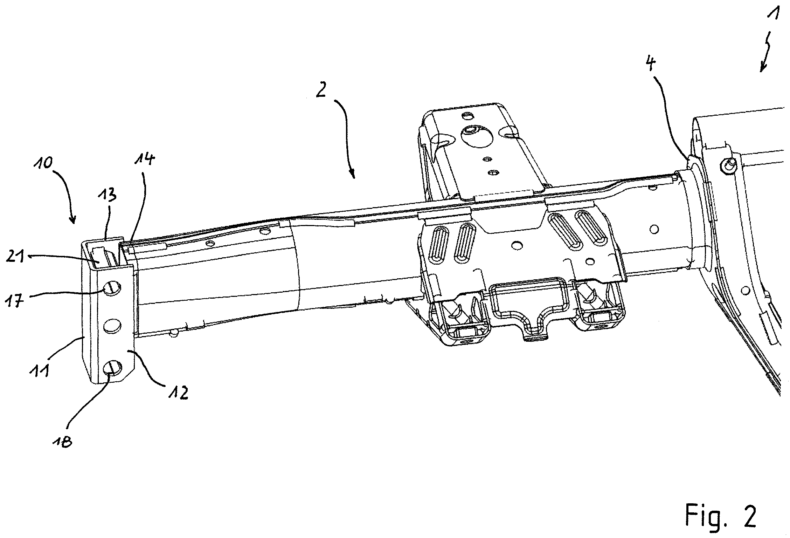

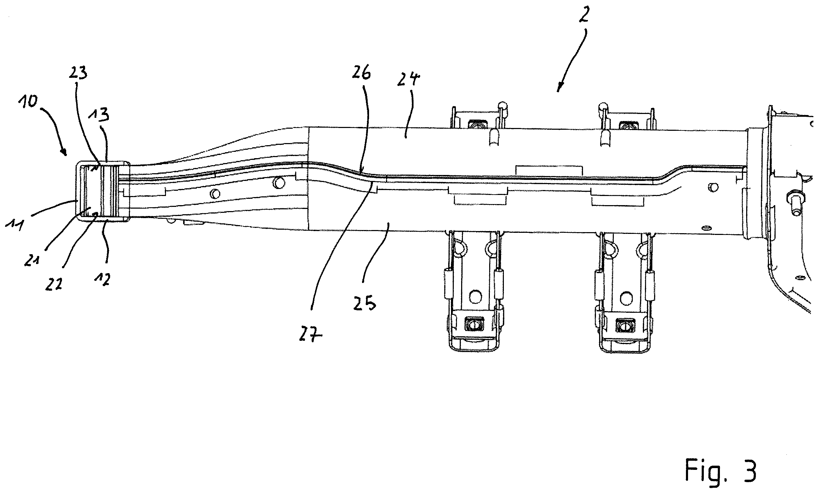

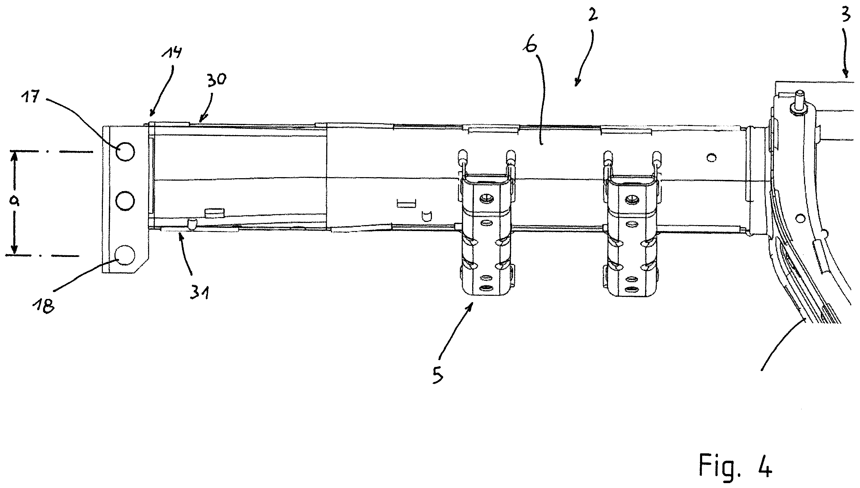

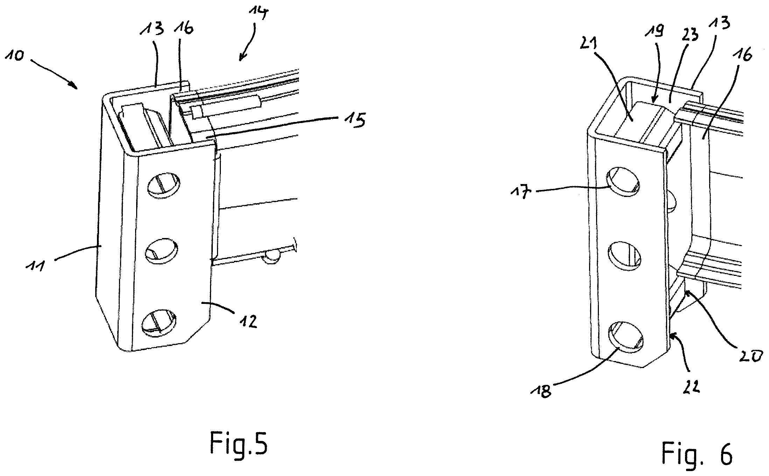

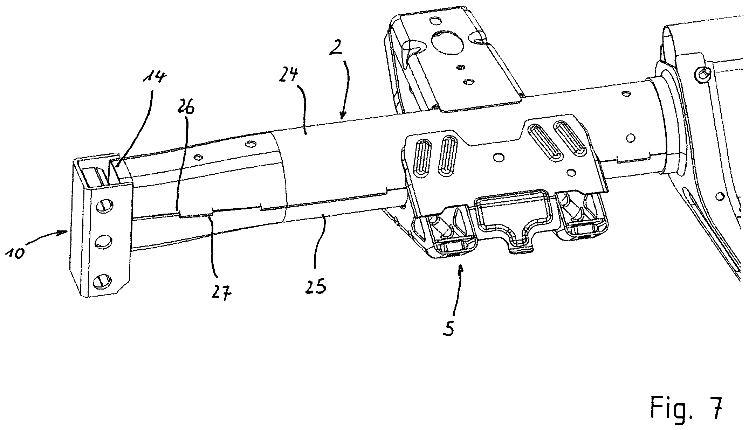

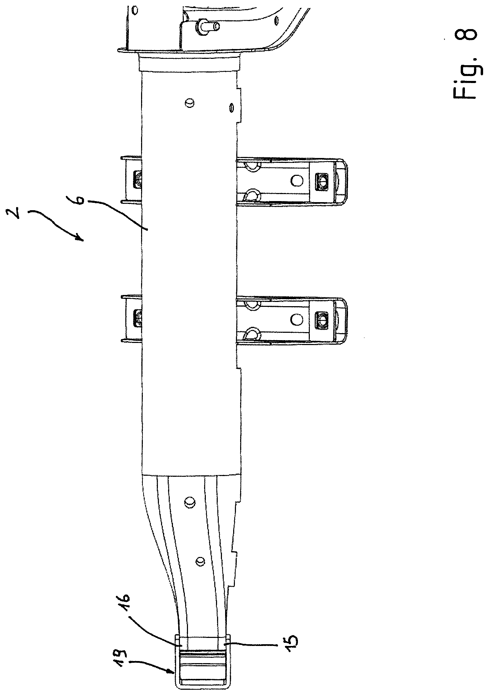

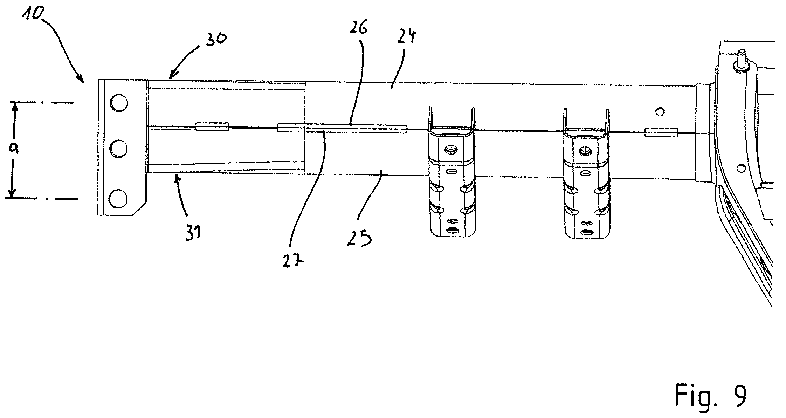

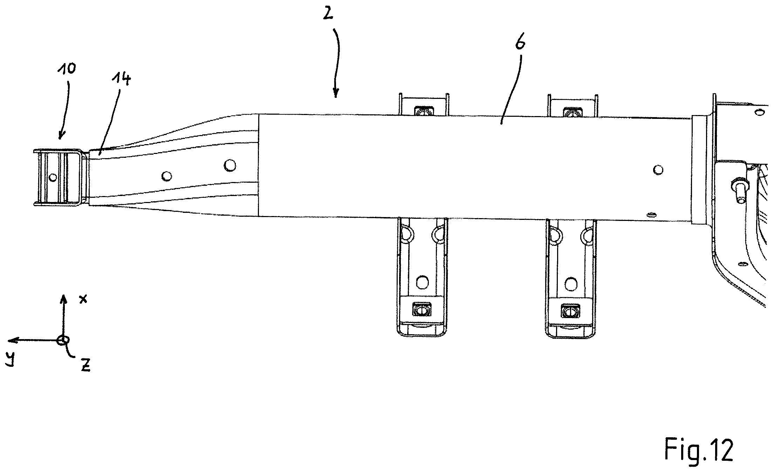

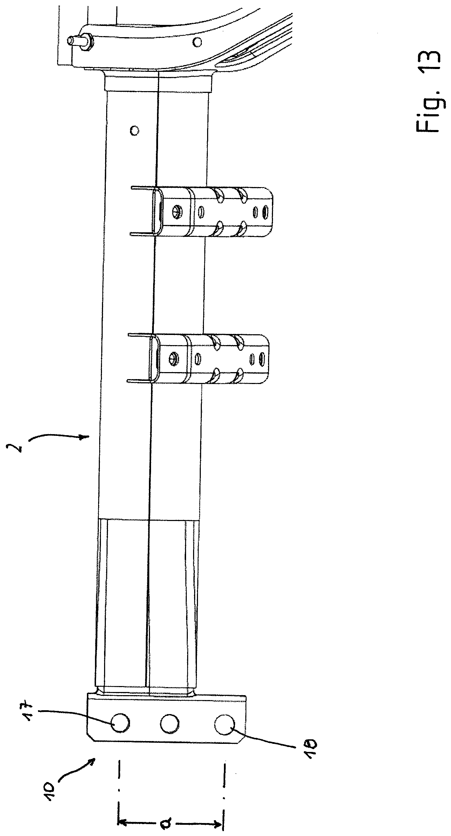

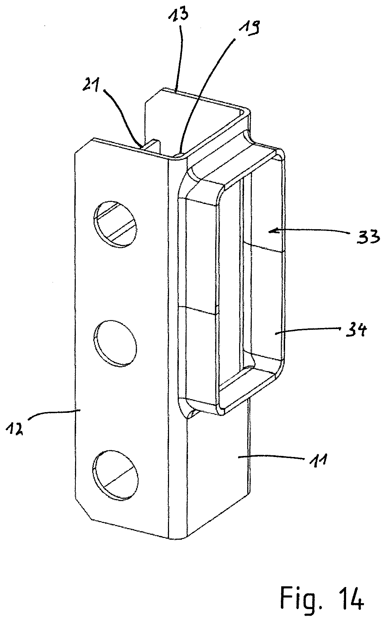

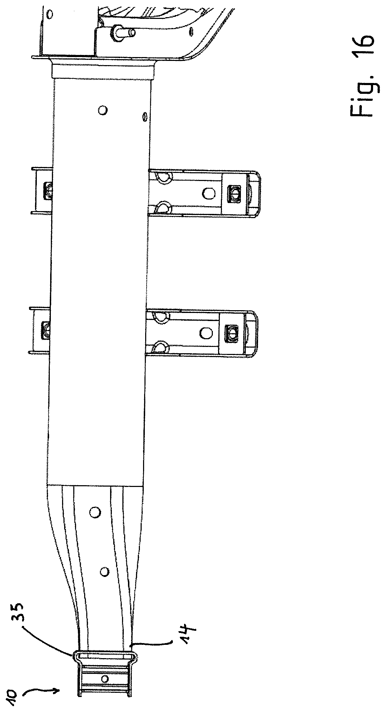

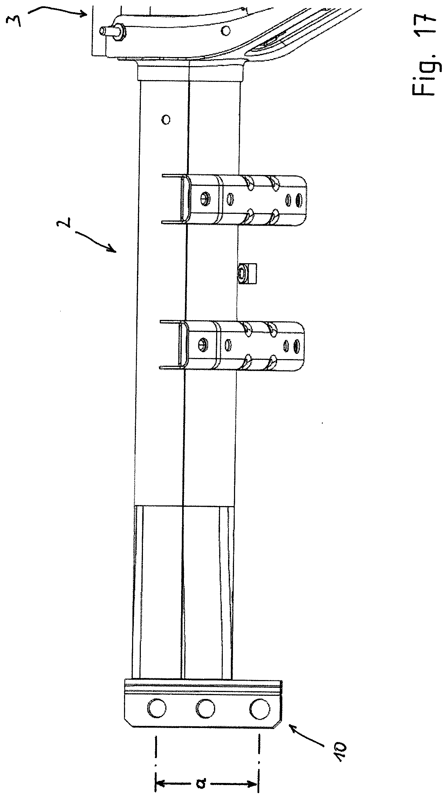

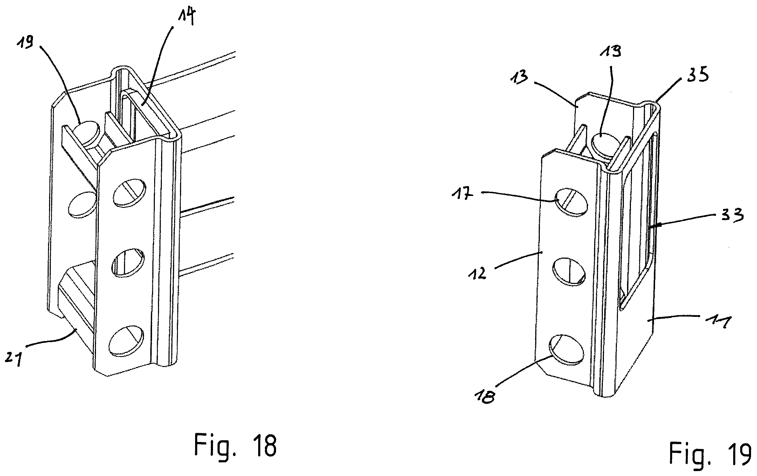

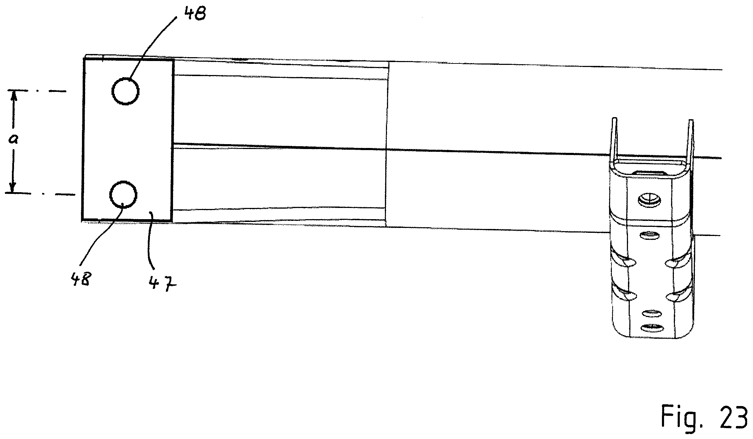

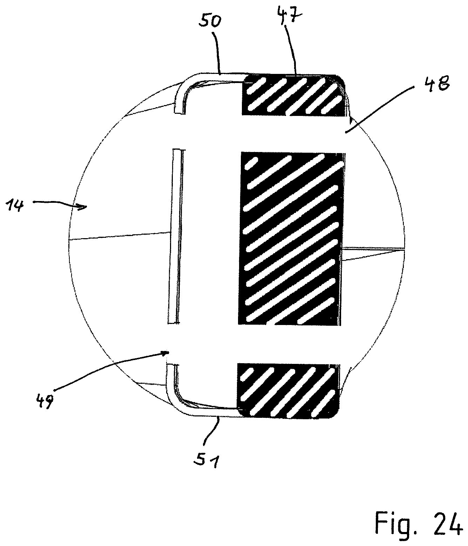

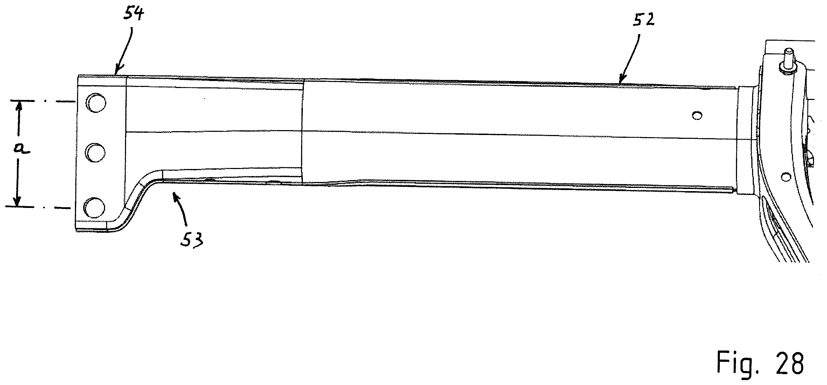

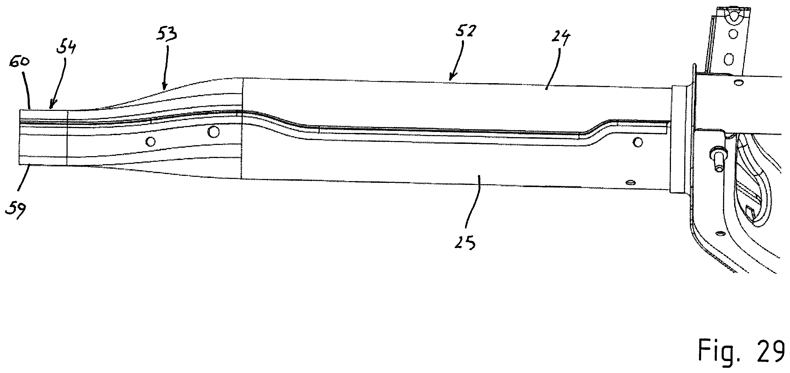

In den Figuren 2 bis 40 ist jeweils der fahrerseitige Längenabschnitt 2 eines Querträgers 1 oder Teile davon dargestellt und erläutert. Grundsätzlich weist ein Querträger 1 der in Rede stehenden Bauart einen beifahrerseitigen Längenabschnitt 3 auf, der so oder ähnlich wie in der Figur 1 dargestellt aufgebaut ist und mit dem fahrerseitigen Längenabschnitt 2 gekoppelt ist.

Die Anbindung des Querträgers 1 an die fahrerseitige A-Säule erfolgt über ein Montagebauteil 10, von welchem eine erste Ausführungsform anhand der Figuren 2 bis 10 erläutert ist.

Das Montagebauteil 10 ist U-förmig konfiguriert und weist einen Steg 11 sowie zwei Schenkel 12, 13 auf.

Das Ende 14 des fahrerseitigen Längenabschnitts 2 ist im Wesentlichen rechteckförmig konfiguriert. Das Montagebauteil 10 ist mit den Schenkeln 12, 13 am Ende 14 des Querträgers 1 gefügt. Hierbei greifen die Schenkel 12, 13 über den vertikal verlaufenden vorderen Seitenabschnitt 15 und den vertikal verlaufenden hinteren Seitenabschnitt 16 des Endes 14, so dass das Montagebauteil 10 mit den Schenkeln 12, 13 die Seitenabschnitte 15, 16 des Endes 14 partiell umgreift und mit dem Ende 14 gefügt ist.

In jedem Schenkel 12, 13 sind übereinander und mit vertikalem Abstand a zueinander Montageöffnungen 17, 18, 19, 20 vorgesehen. Die obere Montageöffnung 17 im ersten vorderen Schenkel 12 und die obere Montageöffnung 19 im zweiten hinteren Schenkel 13 liegen auf einem Höhenniveau und auf einer Achse. Ebenso liegen die untere Montageöffnung 18 im ersten vorderen Schenkel 12 und die untere Montageöffnung 20 im zweiten hinteren Schenkel 13 auf einem Höhenniveau und auf einer Achse. Zwischen den Schenkeln 12, 13 sind Verstärkungselemente 21 eingegliedert. Diese stützen sich an den Innenseiten 22, 23 der Schenkel 12, 13 ab.

Die Verstärkungselemente 21 sind durch U-förmige Stützkörper gebildet, die zwischen den beiden oberen Montageöffnungen 17, 19 und zwischen den beiden unteren Montageöffnungen 18, 20 des Montagebauteils 10 vorgesehen sind. Die offene Seite des U-förmigen Stützkörpers weist zum Steg 11 des Montagebauteils 10.

Die Montageöffnungen 17 - 20 und die Verstärkungselemente 21 sind so zueinander angeordnet, dass längliche Befestigungsmittel, insbesondere Montageschrauben, durch die Montageöffnungen 17, 19 bzw. 18, 20 und die hülsen- bzw. U-förmigen Verstärkungselemente 21 in Fahrzeuglängsrichtung (x-Achse) hindurchgeführt werden können. Hierbei verläuft ein Befestigungsmittel parallel zur Längserstreckung des Verstärkungselements 21 und wird von diesem umgriffen. Über das Montagebauteil 10 und die Befestigungsmittel erfolgt die Festlegung des Querträgers 1 an der fahrerseitigen A-Säule eines Kraftfahrzeugs.

Der fahrerseitige Längenabschnitt 2 des Querträgers 1, wie in den Figuren 2 bis 4 oder 7 bis 9 ersichtlich, ist aus zwei Schalenbauteilen 24, 25, sogenannten Halbschalen, zusammengesetzt, die entlang ihrer Stoßkanten 26, 27 zumindest partiell gefügt sind.

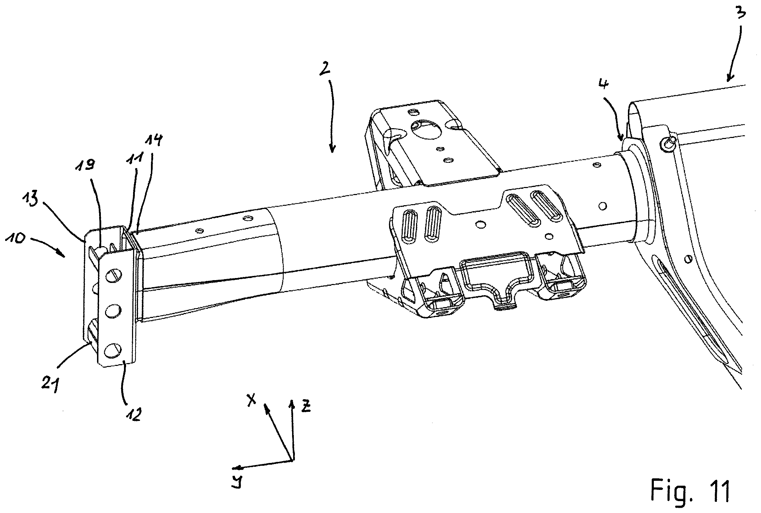

Der fahrerseitige Längenabschnitt 2 des Querträgers 1 gemäß den Darstellungen in den Figuren 11 bis 13 sowie 15 bis 17 ist durch U-O-Formen eines Blechzuschnitts geformt. Aneinander kontaktierende Stoßkanten 28, 29 des Längenabschnitts 2 sind stoffschlüssig zumindest abschnittsweise miteinander gefügt.

Das Montagebauteil 10 schließt oberseitig etwa bündig mit der Oberseite 30 des fahrerseitigen Längenabschnitts 2 ab. Unterseitig steht das Montagebauteil 10 in z-Richtung gegenüber der Unterseite 31 des fahrerseitigen Längenabschnitts 2 vor.

Die Schenkel 12, 13 ebenso wie der Steg 11 des Montagebauteils 10 sind in Abstimmung auf die Querschnittsgeometrie des Endes 14 des fahrerseitigen Längenabschnitts 2 konfiguriert. Über die Länge der Schenkel 12, 13 in Fahrzeugquerachse (y-Achse) wird die Montagelage des Querträgers 1 innerhalb des Kraftfahrzeugs bestimmt.

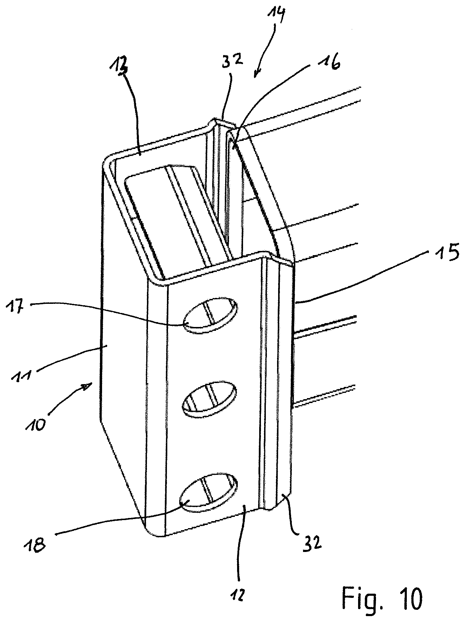

Die Figur 10 zeigt eine Ausführung eines Montagebauteils 10, bei der die Schenkel 12, 13 an ihren zum Ende 14 des fahrerseitigen Längenabschnitts 2 gerichteten freien Längskanten jeweils eine nach vorne gerichtete Umstellung 32 aufweisen. Auf diese Weise kann erreicht werden, dass sich die Schenkel 12, 13 des Montagebauteils 10 in einer Vertikalebene zu den vertikalen Wandabschnitten des Endes 14 erstrecken bzw. in der Vertikalebene verlaufen. Des Weiteren kann die Umstellung 32 eine Positionierhilfe bzw. Fügehilfe für das Montagebauteil 10 bilden.

Bei der Ausführungsform des Querträgers 1, wie anhand der Figuren 11 bis 19 ersichtlich, ist das Montagebauteil 10 U-förmig konfiguriert mit einem Steg 11 und zwei Schenkeln 12, 13. Zwischen den Schenkeln 12, 13 erstrecken sich U-förmige Verstärkungselemente 21, welche im Bereich der zueinander in z-Achse auf dem gleichen Höhenniveau liegenden Montageöffnungen 17, 19 bzw. 18, 20 eingegliedert sind. Das Montagebauteil 10 ist mit dem Steg 11 am Ende 14 des fahrerseitigen Längenabschnitts 2 des Querträgers 1 gefügt. Die Schenkel 12, 13 sind vom Ende 14 des fahrerseitigen Längenabschnitts 2 weg nach außen in y-Achse gerichtet.

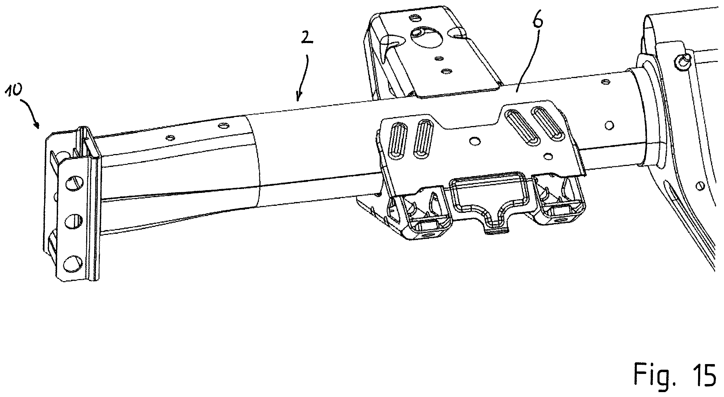

Im Steg 11 des Montagebauteils 10 gemäß der Darstellungen der Figuren 11 bis 14 ist eine Aufnahme 33 ausgebildet, die konfigurativ auf die Querschnittskonfiguration des rechteckigen Endes 14 des fahrerseitigen Längenabschnitts 2 angepasst ist. Die Aufnahme 33 weist umlaufend ein aus dem Material des Montagebauteils 10 ausgebildeten Kragen 34 auf. Das Montagebauteil 10 ist mit der Aufnahme 33 auf das Ende 14 des fahrerseitigen Längenabschnitts 2 aufgesteckt und mit diesem stoffschlüssig gefügt. Eine solche Ausgestaltung zeigen die Figuren 15 und 16 sowie die Figur 18. Möglich ist es auch, dass das Ende 14 des fahrerseitigen Längenabschnitts 2 in die Aufnahme 33 gesteckt ist und diese durchgreift sowie mit dem Montagebauteil 10 gefügt ist. Dies lässt eine vorteilhafte Einstellung der Position der Bauteile, also Montagebauteil 10 und Ende 14, relativ zueinander zu.

Bei dem Montagebauteil 10 gemäß der Darstellung der Figuren 15 bis 19 ist im Steg 11 eine rechteckig konfigurierte kragenlose Aufnahme 33 vorgesehen. Der Steg 11 geht an seinen Längskanten jeweils über einen bogenförmig konfigurierten Übergangsabschnitt 35 in den Schenkel 12 bzw. 13 über.

Möglich ist es, dass ein Kragen an einer Aufnahme 33 nach innen in Richtung der Schenkel 12, 13 umgestellt ist.

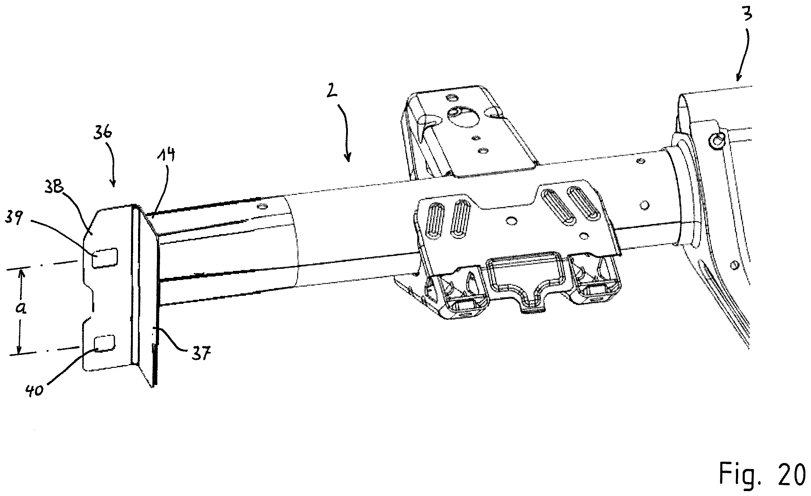

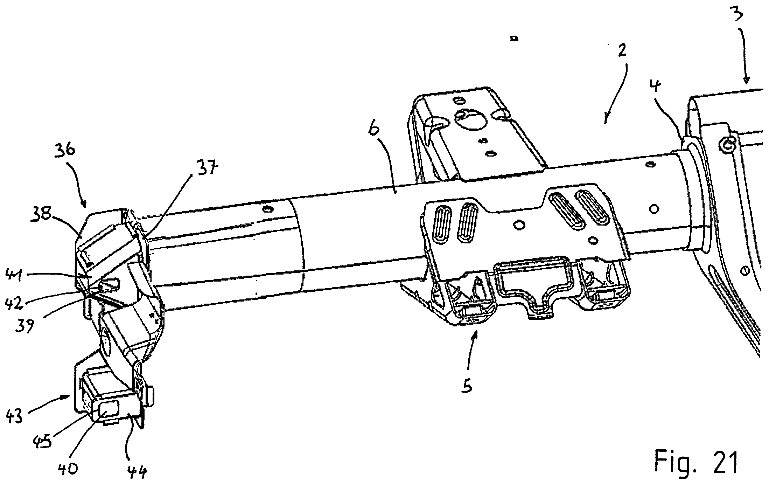

Bei der anhand der Figuren 20 und 21 ersichtlichen Ausführungsform eines Instrumententafelträgers bzw. dessen Querträgers 1 ist am Ende 14 des fahrerseitigen Längenabschnitts 2 ein L-förmiges Montagebauteil 36 gefügt. Die Darstellung der Figur 20 dient der Illustration der L-Form des Montagebauteils 36. Das Montagebauteil 36 weist einen Steg 37 und einen Schenkel 38 auf. Mit dem Steg 37 ist das Montagebauteil 36 stirnseitig am Ende 14 des Querträgers 1 bzw. des fahrerseitigen Längenabschnitts 2 gefügt. Im Schenkel 38 sind mit vertikalem Abstand a übereinander angeordnete Montageöffnungen 39, 40 vorgesehen.

Das Montagebauteil 36, wie in der Figur 21 ersichtlich, ist L-förmig konfiguriert mit einem Steg 37 und einem Schenkel 38. Das Montagebauteil 36 weist materialeinheitlich und einstückig ein im Montagebauteil 36 ausgebildetes Verstärkungselement 41 auf. Das Verstärkungselement 41 ist mit einem Durchgang 42 für ein Befestigungsmittel versehen. Zusätzlich kann am unteren Längenabschnitt 43 des Montagebauteils 36 ein zusätzlicher Stützkörper 44 mit einer Montageöffnung 45 vorgesehen sein.

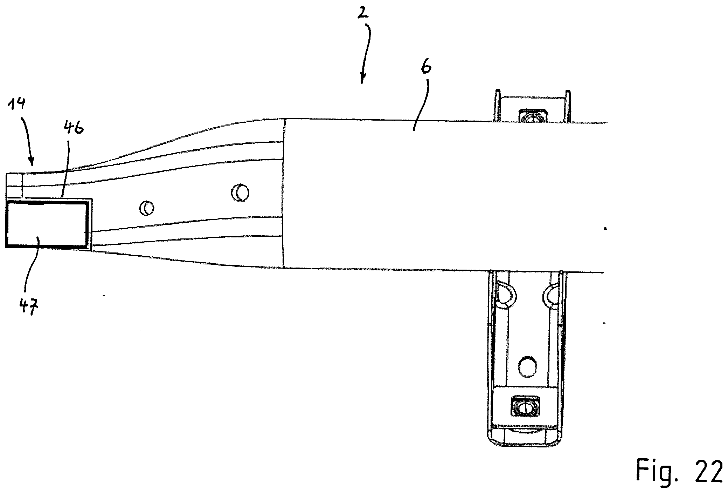

Die Figuren 22 bis 24 sowie 25 und 26 zeigen zwei Ausgestaltungen am A-säulenseitigen Ende 14 des fahrerseitigen Längenabschnitts 2 des Querträgers 1. Das Ende 14 ist partiell ausgeschnitten und mit einer Aussparung 46 versehen. In die nach außen offene Aussparung 46 ist ein Montagebauteil 47 eingesetzt und stoffschlüssig gefügt. Das Montagebauteil 47 weist Montageöffnungen 48 zur Durchführung von Befestigungsmitteln in Fahrzeuglängsachse auf. Die Montageöffnungen 48 im Montagebauteil 47 korrespondieren mit Montageöffnungen 49 im Ende 14. Das Montagebauteil 47 vereint die Funktionen Montage, Führung der Befestigungsmittel und Verstärkung des Endes 14.

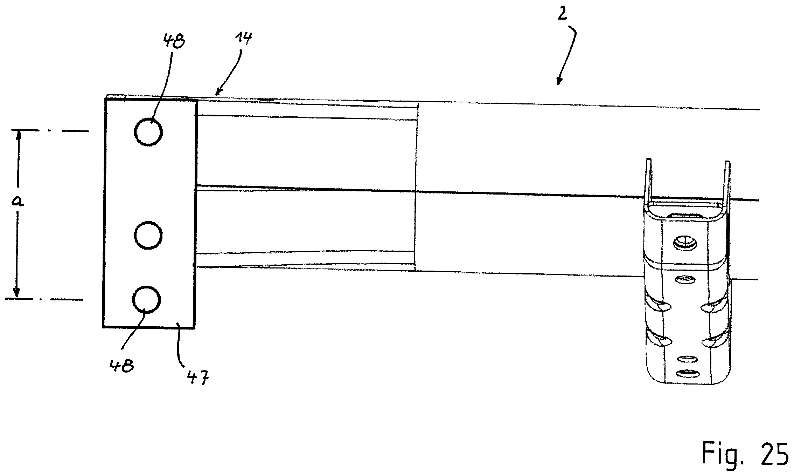

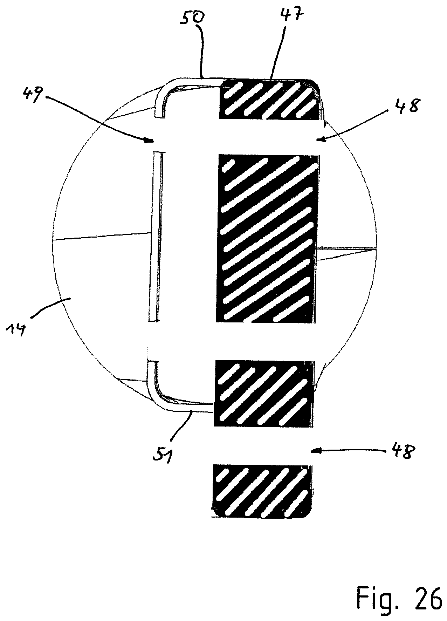

Bei der Darstellung der Figuren 22 bis 24 schließt das Montagebauteil 47 mit dem oberen Wandabschnitt 50 und dem unteren Wandabschnitt 51 des Endes 14 des Längenabschnitts 2 ab. Bei der Ausführungsform, wie in den Figuren 25 und 26 ersichtlich, schließt das Montagebauteil 47 mit dem oberen Wandabschnitt 50 des Endes 14 des fahrerseitigen Längenabschnitts 2 im Wesentlichen bündig ab. Am unteren Wandabschnitt 51 steht das Montagebauteil 47 in vertikaler Richtung gegenüber dem Ende 14 vor.

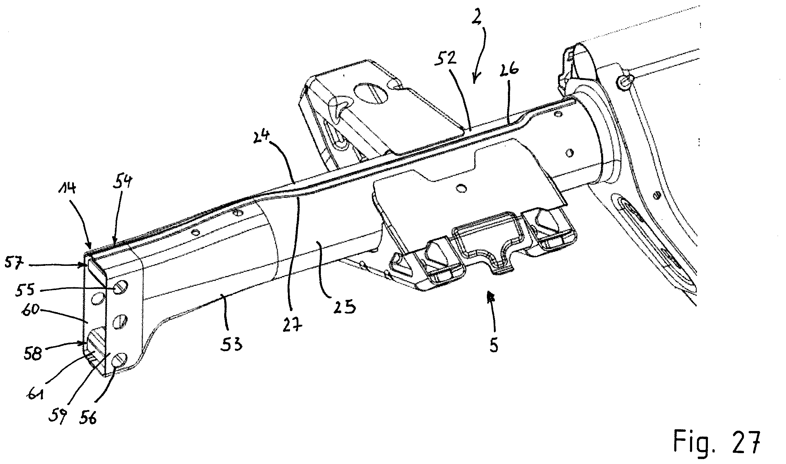

Bei dem Querträger gemäß den Darstellungen der Figuren 27 bis 29 ist der fahrerseitige Längenabschnitt 2 in einer Vertikalebene geteilt und aus zwei Schalenbauteilen 24, 25 gebildet. Diese stoßen in Längsrichtung mit Stoßkanten 26, 27 aneinander an und sind entlang der Stoßkanten 26, 27 zumindest partiell miteinander gefügt. Das A-säulenseitige Ende 14 des fahrerseitigen Längenabschnitts 2 ist im Querschnitt im Wesentlichen rechteckig konfiguriert.

Ein sich im Bereich der Lenksäulenanbindung 5 erstreckender Tragabschnitt 52 des fahrerseitigen Längenabschnitts 2 geht über einen Übergangsabschnitt 53 in einen rechteckig konfigurierten Endabschnitt 54 über. Im Endabschnitt 54 sind mit vertikalem Abstand übereinander Montageöffnungen 55, 56, 57, 58 für den Durchgang von Befestigungsmitteln in Fahrzeuglängsrichtung (x-Achse) vorgesehen. Zwischen den oberen Montageöffnungen 55, 57 im ersten Schenkel 59 und im zweiten Schenkel 60 des Endabschnitts 54 und den unteren Montageöffnungen 56, 58 im ersten Schenkel 59 und im zweiten Schenkel 60 sind Verstärkungselemente 61 eingegliedert. Die Verstärkungselemente 61 sind hülsen- oder U-förmig konfiguriert und stützen sich an der Innenseite der Schenkel 59, 60 des Endabschnitts 54 ab. Die Verstärkungselemente 61 sind in x-Richtung orientiert.

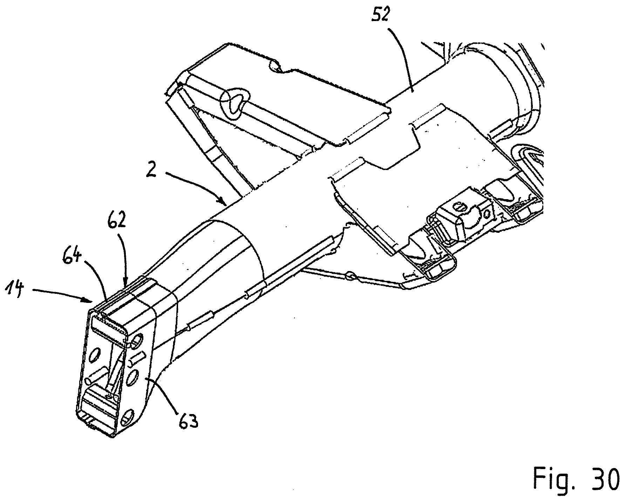

Der fahrerseitige Längenabschnitt 2, wie in der Figur 30 zu erkennen, weist einen durch U-O-Formen hergestellten Tragabschnitt 52 auf, der sich zum A-säulenseitigen Ende 14 hin verjüngt. An den Tragabschnitt 52 ist ein Endabschnitt 62 angesetzt. Dieser Endabschnitt 62 besteht aus zwei Schalenbauteilen 63, 64, die miteinander gefügt sind.

Der Endabschnitt 62 schließt sich in y-Richtung an den Tragabschnitt 52 an. Im Bereich des A-säulenseitigen freien Endes 14 des Querträgers 1 ist der Endabschnitt 62 rechteckig konfiguriert und weist Montageöffnungen 55 - 58 für den Durchgang von Befestigungsmitteln in Fahrzeuglängsrichtung (x-Achse) auf. Im Endabschnitt 62 sind U-förmig konfigurierte Verstärkungselemente 61 eingegliedert. Diese verbinden jeweils die obere Montageöffnung 55 im ersten vorderen Schenkel 59 und die obere Montageöffnung 57 im zweiten hinteren Schenkel 60 sowie die untere Montageöffnung 56 im ersten vorderen Schenkel 59 und die untere Montageöffnung 58 im zweiten hinteren Schenkel 60. Die Verstärkungselemente 61 bilden einen Durchgang und erstrecken sich in Richtung der x-Achse, die durch die Montageöffnungen 55, 57 bzw. 56, 58 führt.

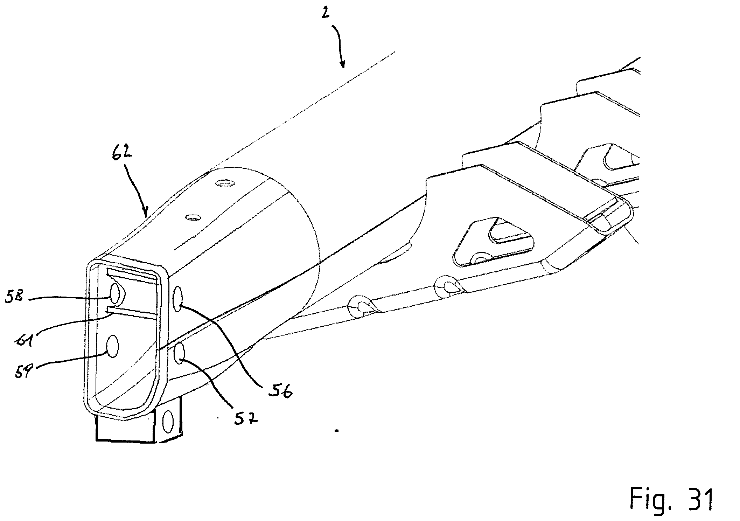

Verschiedene Querschnittskonfigurationen eines Endes 14 bzw. eines Endabschnitts 54 oder 62 des fahrerseitigen Längenabschnitts 2 zeigen die Figuren 31 bis 34. Möglich ist, dass der Längenabschnitt durch Schalenkörper gebildet ist. Erfindungsgemäß wird der fahrerseitige Längenabschnitt 2 in einer Vertikalebene geteilt.

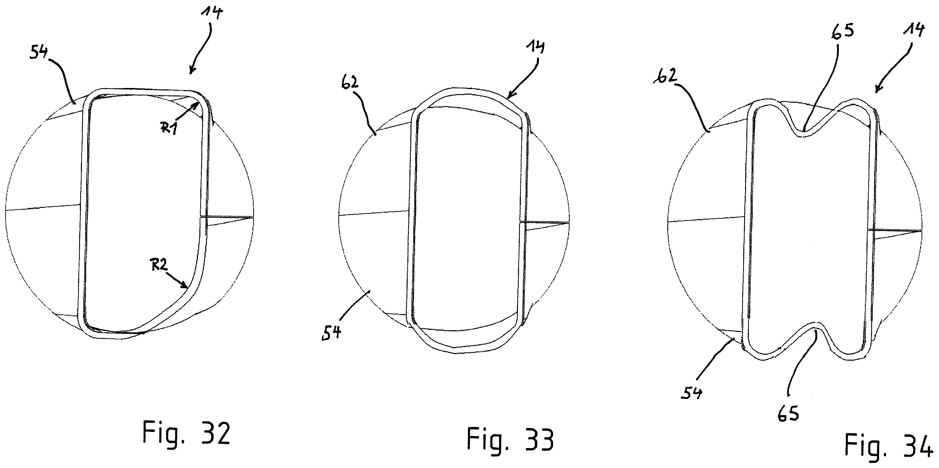

Das A-säulenseitige Ende 14 bzw. der Endabschnitt 54 oder 62 gemäß der Darstellung der Figuren 31 und 32 ist annähernd D-förmig konfiguriert mit einem Radius R1 am Übergang der Oberseite zur Vorderseite und einem demgegenüber mit größerem Radius verlaufenden Radius R2 am Übergang zwischen der vorderen Seitenwand und der Unterseite.

Das Ende 14 bzw. der Endabschnitt 54, 62, wie in der Figur 33 ersichtlich, ist im Querschnitt etwa oval konfiguriert.

Bei dem Ende 14 bzw. dem Endabschnitt 54, 62 gemäß der Darstellung in der Figur 34 sind im oberen Wandabschnitt und im unteren Wandabschnitt sich in Längsrichtung erstreckende Sicken 65 vorgesehen.

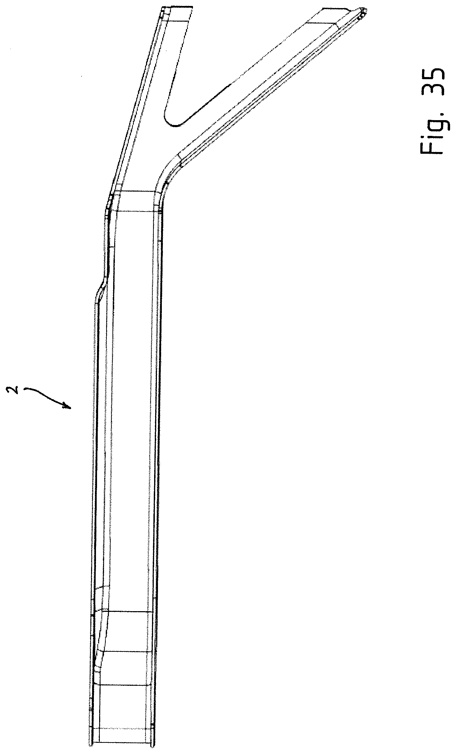

Bei der Darstellung des fahrerseitigen Längenabschnitts 2, wie in der Figur 35 ersichtlich, ist der Längenabschnitt 2 aus einem U-Profil oder einem Hut-Profil konfiguriert. Nicht ersichtlich sind hier erfindungsgemäße Montagebauteile zur Anbindung des Querträgers an einer A-Säule. Insbesondere ist am fahrerseitigen Ende 2 des Querträgers 1 ein Montagebauteil vorgesehen, welches U-förmig konfiguriert ist mit einem Steg und zwei Schenkeln. In den Schenkeln sind mit vertikalem Abstand zueinander zumindest zwei Montageöffnungen vorgesehen, wobei sich zwischen den Schenkeln zumindest ein sich an den Schenkeln abstützendes Verstärkungselement eingegliedert ist.

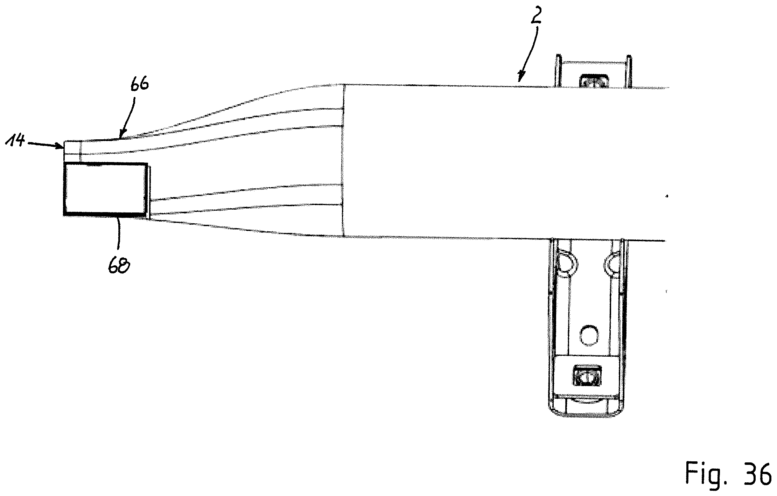

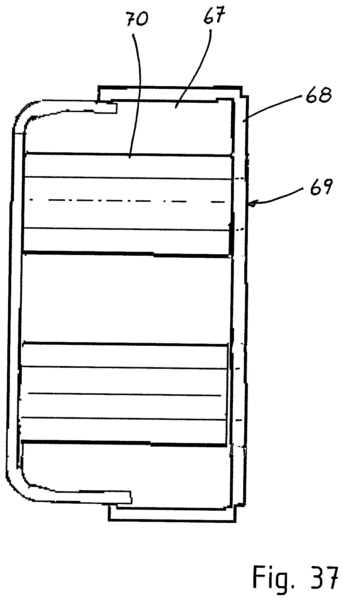

Bei der in den Figuren 36 und 37 dargestellten Variante ist der Endabschnitt 66 des fahrerseitigen Längenabschnitts 2 bereichsweise ausgeschnitten. In die zum Ende 14 des Querträgers 1 hin offene Aussparung 67 ist ein Montagebauteil 68 eingesetzt. Im Montagebauteil 68 ebenso wie im Endabschnitt 66 sind Montageöffnungen 69 mit dazwischen eingegliederten Verstärkungselementen 70 vorgesehen.

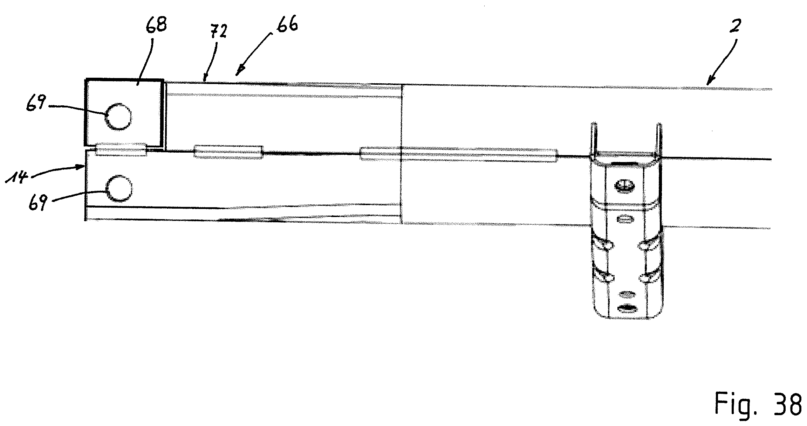

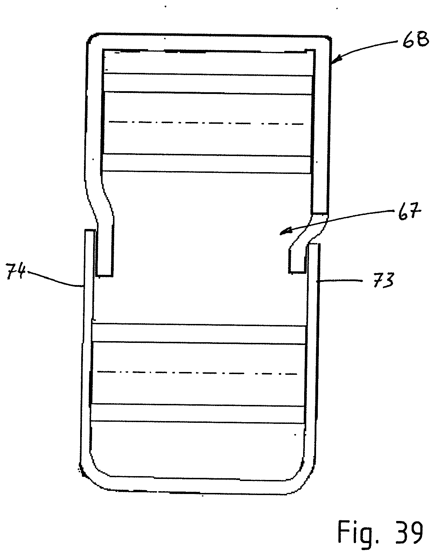

Während die Darstellungen der Figuren 36 und 37 eine Aussparung 67 im Bereich der vorderen Seitenwand 71 des Endabschnitts 66 zeigen, ist bei der Ausführungsform gemäß der Darstellung der Figuren 38 und 39 ein Bereich der Oberseite 72 und der vorderen Seitenwand 73 und der hinteren Seitenwand 74 des Endabschnitts 66 durch eine Aussparung 67 freigemacht und durch ein Montagebauteil 68 verschlossen.

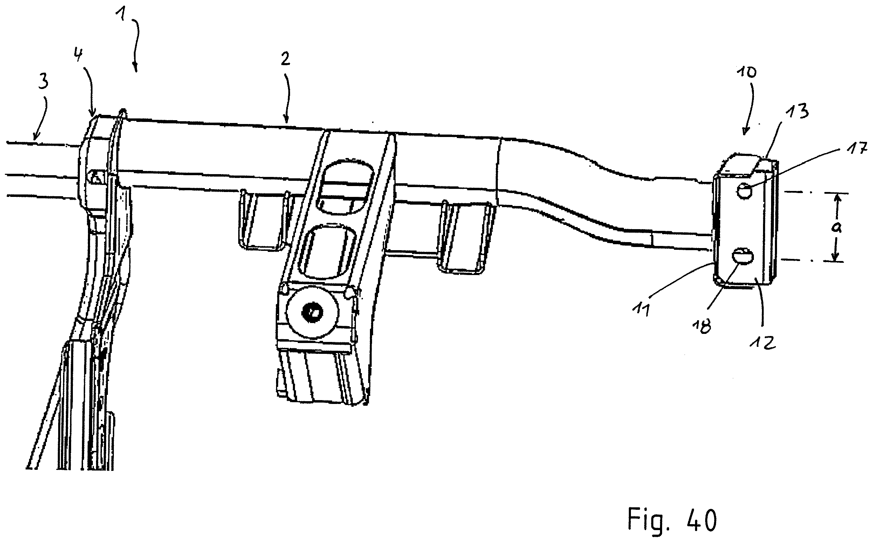

Auch die Figur 40 zeigt den fahrerseitigen Längenabschnitt 2 eines Querträgers 1, an dessen Ende 14 ein U-förmig konfiguriertes Montagebauteil 10 gefügt ist. Das Montagebauteil 10 weist einen Steg 11 und zwei Schenkel 12, 13 auf. Das Montagebauteil 10 ist mit dem Steg 11 stirnseitig vor das Ende 14 des fahrerseitigen Längenabschnitts 2 angesetzt und stoffschlüssig mit dem Ende 14 gefügt. Mit vertikalem Abstand übereinander sind in jedem Schenkel 12, 13 jeweils zwei Montageöffnungen 17 - 20 vorgesehen. Zwischen den Schenkeln 12, 13 sind hier nicht ersichtliche sich auf den Innenseiten der Schenkel 12, 13 abstützende Verstärkungselemente eingegliedert.

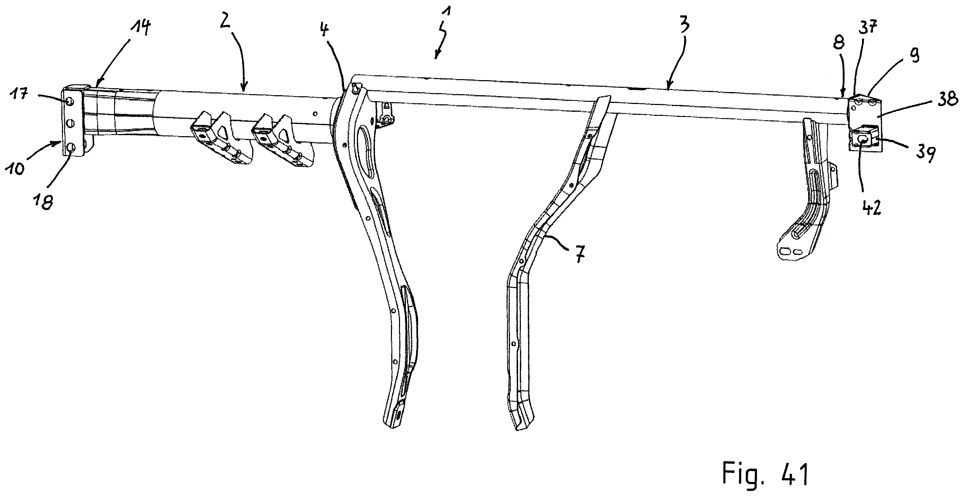

Die Figur 41 zeigt eine weitere Ausführungsform eines Instrumententafelträgers und dessen Querträger 1. Der Querträger 1 weist einen fahrerseitigen Längenabschnitt 2 und einen beifahrerseitigen Längenabschnitt 3 auf. Diese sind über ein Verbindungsbauteil 4 miteinander gekoppelt. Der beifahrerseitige Längenabschnitt 3 ist im Wesentlichen durch ein gradlinig verlaufendes Rohr gebildet. Am A-säulenseitigen Ende 8 des beifahrerseitigen Längenabschnitts 3 ist ein Montagebauteil 9 an das Ende 8 des Querträgers 1 gefügt. Das Montagebauteil 9 ist L-förmig konfiguriert und weist einen Steg 37 und einen Schenkel 38 auf. Am Montagebauteil 9 ist ein Verstärkungselement 41 gefügt, welches einen Durchgang 42 für ein Befestigungsmittel aufweist.

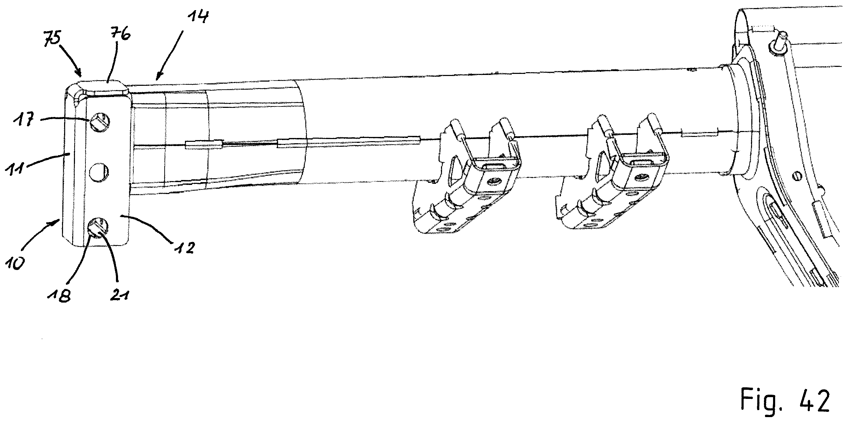

Die Figur 42 zeigt den fahrerseitigen Längenabschnitt 2 des Querträgers 1.

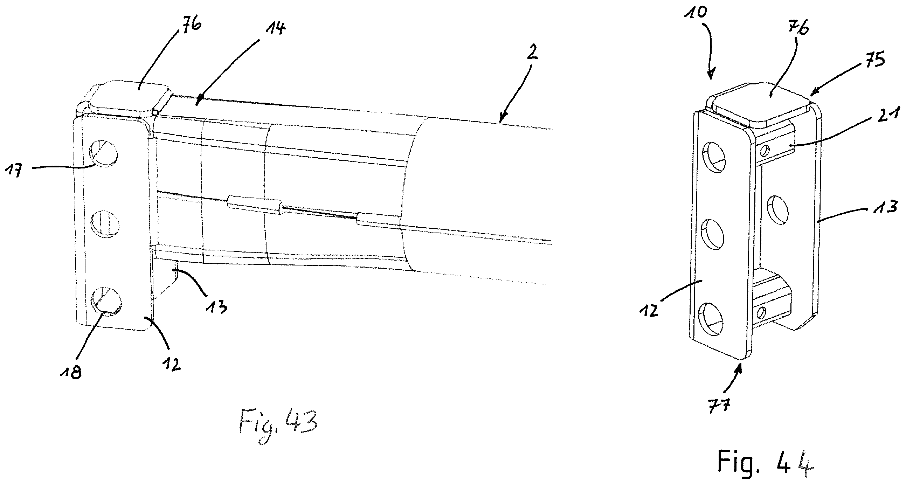

Die Figur 43 zeigt den Endabschnitt bzw. das Ende 14 des fahrerseitigen Längenabschnitts 2. Am Ende 14 ist ein Montagebauteil 10 gefügt. Das Montagebauteil 10 ist im horizontalen Querschnitt U-förmig konfiguriert und weist einen Steg 11 und zwei Schenkel 12, 13 auf. Die Konfiguration entspricht der Ausführung des Montagebauteils 10, wie anhand der Figuren 2 bis 6 beschrieben. Auf die entsprechenden Erläuterungen wird verwiesen.

In jedem Schenkel 12, 13 sind übereinander und mit vertikalem Abstand Montageöffnungen 17, 19 bzw. 18, 20 vorgesehen. Die auf einem Höhenniveau liegenden Montageöffnungen 17, 19 bzw. 18, 20 korrespondieren zueinander und sind zur Durchführung eines länglichen Befestigungselements, insbesondere einer Montageschraube, ausgelegt. Weiterhin sind Verstärkungselemente 21 eingegliedert, welche sich zwischen den Schenkeln 12, 13 erstrecken und sich an diesen abstützen.

Die Verstärkungselemente 21 sind vorteilhaft, jedoch nicht zwingend. Ein Montagebauteil 10 kann folglich auch ohne Verstärkungselemente ausgeführt sein.

Das Montagebauteil 10, wie in den Figuren 41 bis 44 dargestellt, weist an seiner Oberseite 75 einen durch eine Abkantung gebildeten Deckelschenkel 76 auf. Der Deckelschenkel 76 deckt die Oberseite 75 des Montagebauteils 10 ab und greift über das Ende 14 des fahrerseitigen Längenabschnitts 2 des Querträgers 1.

Der Deckelschenkel 76 und die vertikal in z-Achse verlaufenden Schenkel 12, 13 des Montagebauteils 10 können miteinander stoffschlüssig gefügt sein.

Nicht dargestellt, aber optional möglich, ist, dass das Montagebauteil 10 an seiner Unterseite 77 einen Bodenschenkel aufweist. Der Bodenschenkel ist in gleicher Weise gestaltet wie der Deckelschenkel 76 an der Oberseite 75 des Montagebauteils 10.

Das Montagebauteil 10 gemäß der Darstellung der Figuren 41 bis 44, ebenso wie das Montagebauteil 10, wie in den Figuren 1 bis 19 dargestellt und erläutert, ist aus einem Blechzuschnitt hergestellt, welcher der Abwicklung des Montagebauteils entspricht. Der Blechzuschnitt ist entsprechend umformtechnisch bearbeitet, so dass sich die U-förmige Konfiguration mit Steg 11 und Schenkeln 12, 13 sowie optional mit einem Deckelschenkel 76 an der Oberseite 75 und/oder einem Bodenschenkel an der Unterseite 77 ergibt.

### Bezugszeichen:

- 1 -: Querträger
- 2 -: fahrerseitiger Längenabschnitt
- 3 -: beifahrerseitiger Längenabschnitt
- 4 -: Verbindungsbauteil
- 5 -: Lenksäulenanbindung
- 6 -: Tragabschnitt
- 7 -: Abstützstreben
- 8 -: Ende
- 9 -: Montagebauteil
- 10 -: Montagebauteil
- 11 -: Steg
- 12 -: Schenkel
- 13 -: Schenkel
- 14 -: Ende
- 15 -: vorderer Seitenabschnitt
- 16 -: hinterer Seitenabschnitt
- 17 -: Montageöffnung
- 18 -: Montageöffnung
- 19 -: Montageöffnung
- 20 -: Montageöffnung
- 21 -: Verstärkungselemente
- 22 -: Innenseite
- 23 -: Innenseite
- 24 -: Schalenbauteil
- 25 -: Schalenbauteil
- 26 -: Stoßkante
- 27 -: Stoßkante
- 28 -: Stoßkante
- 29 -: Stoßkante
- 30 -: Oberseite
- 31 -: Unterseite
- 32 -: Umstellung
- 33 -: Aufnahme
- 34 -: Kragen
- 35 -: Übergangsabschnitt
- 36 -: Montagebauteil
- 37 -: Steg
- 38 -: Schenkel
- 39 -: Montageöffnung
- 40 -: Montageöffnung
- 41 -: Verstärkungselemente
- 42 -: Durchgang
- 43 -: unterer Längenabschnitt
- 44 -: Stützkörper
- 45 -: Montageöffnung
- 46 -: Aussparung
- 47 -: Montagebauteil
- 48 -: Montageöffnung
- 49 -: Montageöffnung
- 50 -: oberer Wandabschnitt
- 51 -: unterer Wandabschnitt
- 52-: Tragabschnitt
- 53 -: Übergangsabschnitt
- 54 -: Endabschnitt
- 55 -: Montageöffnung
- 56 -: Montageöffnung
- 57 -: Montageöffnung
- 58 -: Montageöffnung
- 59 -: Schenkel
- 60 -: Schenkel
- 61 -: Verstärkungselement
- 62 -: Endabschnitt
- 63 -: Schalenbauteil
- 64 -: Schalenbauteil
- 65 -: Sicken
- 66 -: Endabschnitt
- 67 -: Aussparung
- 68 -: Montagebauteil
- 69 -: Montageöffnungen
- 70 -: Verstärkungselement
- 71 -: Seitenwand
- 72 -: Oberseite
- 73 -: vordere Seitenwand
- 74 -: hintere Seitenwand
- 75 -: Oberseite von 10
- 76 -: Deckelschenkel
- 77 -: Unterseite von 10

- a -: Abstand

## Patentansprüche

1. Instrumententafelträger für ein Kraftfahrzeug, der einen zwischen den A-Säulen einer Kraftfahrzeugkarosserie eingliederbaren Querträger (1) aufweist, wobei der Querträger (1) zumindest an einem Ende (14) mit einem Montagebauteil (10) zur Befestigung an einer A-Säule versehen ist, wobei das Montagebauteil (10) U-förmig konfiguriert ist und einen Steg (11) mit zwei Schenkeln (12, 13) aufweist und in jedem Schenkel (12, 13) zumindest zwei mit vertikalem Abstand zueinander angeordnete Montageöffnungen (17 - 20) vorgesehen sind, **dadurch gekennzeichnet,dass** der fahrerseitige Längenabschnitt (2) des Querträgers (1) in einer Vertikalebene geteilt ist.

2. Instrumententafelträger nach Anspruch 1, **dadurch gekennzeichnet, dass** zwischen die Schenkel (12, 13) zumindest ein sich an den Schenkeln (12, 13) abstützendes Verstärkungselement (21) eingegliedert ist.

3. Instrumententafelträger nach Anspruch 2, **dadurch gekennzeichnet, dass** das Verstärkungselement (21) zwischen einer Montageöffnung (17, 18) im ersten Schenkel (12) und einer Montageöffnung (19, 20) im zweiten Schenkel (13) angeordnet ist.

4. Instrumententafelträger nach Anspruch 2 oder 3, **dadurch gekennzeichnet, dass** das Verstärkungselement (21) eine Hülse ist oder ein im Querschnitt U-, V-, S- oder Z-förmig konfigurierter Stützkörper ist.

5. Instrumententafelträger nach einem der Ansprüche 1 bis 4, **dadurch gekennzeichnet, dass** das Montagebauteil (10) mit den Schenkeln (12, 13) am Ende (14) des Querträgers (1) gefügt ist.

6. Instrumententafelträger nach einem der Ansprüche 1 bis 5, **dadurch gekennzeichnet, dass** das Montagebauteil (10) mit den Schenkeln (12, 13) Seitenabschnitte (15, 16) des Endes (14) umgreift.

7. Instrumententafelträger nach einem der Ansprüche 1 bis 6, **dadurch gekennzeichnet, dass** das Montagebauteil (10) mit dem Steg (11) am Ende (14) des Querträgers (1) gefügt ist.

8. Instrumententafelträger nach einem der Ansprüche 1 bis 7, **dadurch gekennzeichnet, dass** ein fahrerseitiger Längenabschnitt (2) des Querträgers (1) aus zumindest zwei Schalenbauteilen (24, 25) zusammengesetzt ist.

9. Instrumententafelträger nach einem der Ansprüche 1 bis 8, **dadurch gekennzeichnet, dass** der A-säulenseitige Endabschnitt des fahrerseitigen Längenabschnitts (2) des Querträgers (1) rechteckförmig konfiguriert ist.

10. Instrumententafelträger nach einem der Ansprüche 1 bis 9, **dadurch gekennzeichnet, dass** der A-säulenseitige Endabschnitt des fahrerseitigen Längenabschnitts (2) des Querträgers (1) oval ausgebildet ist.

11. Instrumententafelträger nach einem der Ansprüche 1 bis 10, **dadurch gekennzeichnet, dass** Sicken (65) in der oberen und/oder der unteren Seitenwand des A-säulenseitige Endabschnitts des fahrerseitigen Längenabschnitts (2) des Querträgers (1) vorgesehen sind.

12. Instrumententafelträger nach einem der Ansprüche 1 bis 11, **dadurch gekennzeichnet, dass** zumindest in einer Seitenwand des A-säulenseitige Endabschnitts des fahrerseitigen Längenabschnitts (2) des Querträgers (1) eine zum Ende (14) des Querträgers (1) hin offene Aussparung (67) vorgesehen ist.

13. Instrumententafelträger nach Anspruch 12, **dadurch gekennzeichnet, dass** in die Aussparung (67) ein Montagebauteil (68) eingesetzt ist, welches zumindest eine Montageöffnung (69) für den Durchgang eines Befestigungsmittels in Fahrzeuglängsrichtung (x-Achse) aufweist.

## Claims

1. Instrument panel holder for a motor vehicle, which has a cross-beam (1) which can be incorporated between the A-columns of a motor vehicle body, wherein the cross-beam (1) is equipped at least at one end (14) with a mounting component (10) for fastening to an A-column, wherein the mounting component (10) is configured to be U-shaped and has a rib (11) with two legs (12, 13) and in each leg (12, 13) are provided at least two mounting openings (17 - 20) arranged at a vertical distance from one another, **characterised in that** the driver-side longitudinal portion (2) of the cross-beam (1) is divided in a vertical plane.

2. Instrument panel holder according to claim 1, **characterised in that** between the legs (12, 13) is incorporated at least one reinforcement element (21) which is supported by the legs (12, 13).

3. Instrument panel holder according to claim 2, **characterised in that** the reinforcement element (21) is arranged between a mounting opening (17, 18) in the first leg (12) and a mounting opening (19, 20) in the second leg (13).

4. Instrument panel holder according to claim 2 or 3, **characterised in that** the reinforcement element (21) is a sleeve or a supporting body which is U-shaped, V-shaped, S-shaped or Z-shaped in configuration in cross-section.

5. Instrument panel holder according to any of claims 1 to 4, **characterised in that** the mounting component (10) is joined to the legs (12, 13) at the end (14) of the cross-beam (1).

6. Instrument panel holder according to any of claims 1 to 5, **characterised in that** the mounting component (10) encloses with the legs (12, 13) side portions (15, 16) of the end (14).

7. Instrument panel holder according to any of claims 1 to 6, **characterised in that** the mounting component (10) is joined to the rib (11) at the end (14) of the cross-beam (1).

8. Instrument panel holder according to any of claims 1 to 7, **characterised in that** a driver-side longitudinal portion (2) of the cross-beam (1) is composed of at least two shell components (24, 25).

9. Instrument panel holder according to any of claims 1 to 8, **characterised in that** the A-column-side end portion of the driver-side longitudinal portion (2) of the cross-beam (1) is rectangular in form.

10. Instrument panel holder according to any of claims 1 to 9, **characterised in that** the A-column-side end portion of the driver-side longitudinal portion (2) of the cross-beam (1) is oval in form.

11. Instrument panel holder according to any of claims 1 to 10, **characterised in that** beads (65) are provided in the upper and/or lower side wall of the A-column-side end portion of the driver-side longitudinal portion (2) of the cross-beam (1).

12. Instrument panel holder according to any of claims 1 to 11, **characterised in that** a cut-out (67) which is open to the end (14) of the cross-beam (1) is provided at least in a side wall of the A-column-side end portion of the driver-side longitudinal portion (2) of the cross-beam (1).

13. Instrument panel holder according to claim 12, **characterised in that** a mounting component (68) which has at least one mounting opening (69) for the through-passage of a fastening means in vehicle longitudinal direction (x-axis) is inserted into the cut-out (67).

## Revendications

1. Support de tableau de bord pour un véhicule automobile, qui présente une poutre transversale (1) pouvant être intégrée entre les montants A d'une carrosserie de véhicule automobile, dans lequel la poutre transversale (1) est dotée au moins à une extrémité (14) d'un composant de montage (10) pour la fixation à un montant A, dans lequel le composant de montage (10) est configuré en forme de U et présente une traverse (11) avec deux branches (12, 13) et au moins deux ouvertures de montage (17 - 20) sont prévues à distance verticale l'une de l'autre dans chaque branche (12, 13), **caractérisé en ce que** la section longitudinale (2) côté conducteur de la poutre transversale (1) est divisée en un plan vertical.

2. Support de tableau de bord selon la revendication 1, **caractérisé en ce qu'**au moins un élément de renforcement (21) s'appuyant sur les branches (12, 13) est inséré entre les branches (12, 13).

3. Support de tableau de bord selon la revendication 2, **caractérisé en ce que** l'élément de renforcement (21) est disposé entre une ouverture de montage (17, 18) dans la première branche (12) et une ouverture de montage (19, 20) dans la seconde branche (13).

4. Support de tableau de bord selon la revendication 2 ou 3, **caractérisé en ce que** l'élément de renforcement (21) est une douille ou est un corps de support configuré en forme de U, V, S ou Z en section transversale.

5. Support de tableau de bord selon l'une quelconque des revendications 1 à 4, **caractérisé en ce que** le composant de montage (10) est placé avec les branches (12, 13) à l'extrémité (14) de la poutre transversale (1).

6. Support de tableau de bord selon l'une quelconque des revendications 1 à 5, **caractérisé en ce que** le composant de montage (10) entoure avec les branches (12, 13) des sections latérales (15, 16) de l'extrémité (14).

7. Support de tableau de bord selon l'une quelconque des revendications 1 à 6, **caractérisé en ce que** le composant de montage (10) est placé avec la traverse (11) à l'extrémité (14) de la poutre transversale (1).

8. Support de tableau de bord selon l'une quelconque des revendications 1 à 7, **caractérisé en ce qu'**une section longitudinale (2) côté conducteur de la poutre transversale (1) est composée d'au moins deux composants de coque (24, 25).

9. Support de tableau de bord selon l'une quelconque des revendications 1 à 8, **caractérisé en ce que** la section d'extrémité côté montant A de la section longitudinale côté conducteur (2) de la poutre transversale (1) est configurée en forme de rectangle.

10. Support de tableau de bord selon l'une quelconque des revendications 1 à 9, **caractérisé en ce que** la section d'extrémité côté montant A de la section longitudinale côté conducteur (2) de la poutre transversale (1) est conçue de forme ovale.

11. Support de tableau de bord selon l'une quelconque des revendications 1 à 10, **caractérisé en ce que** des nervures (65) sont prévues dans la paroi latérale supérieure et/ou inférieure de la section d'extrémité côté montant A de la section longitudinale côté conducteur (2) de la poutre transversale (1).

12. Support de tableau de bord selon l'une quelconque des revendications 1 à 11, **caractérisé en ce qu'**un évidement (67) ouvert vers l'extrémité (14) de la poutre transversale (1) est prévu dans au moins une paroi latérale de la section d'extrémité côté montant A de la section longitudinale côté conducteur (2) de la poutre transversale (1).

13. Support de tableau de bord selon la revendication 12, **caractérisé en ce qu'**un composant de montage (68) est inséré dans l'évidement (67), lequel présente au moins une ouverture de montage (69) pour le passage d'un moyen de fixation dans la direction longitudinale du véhicule (axe x).
